# EUROPEAN PATENT SPECIFICATION

(11) **EP 3 439 959 B1**
(45) Date of publication and mention of the grant of the patent: **04.08.2021**
(21) Application number: 17779656.2
(22) Date of filing: 04.04.2017
(51) Int. Cl.: B64D 11/06, B64D 25/02, B64D 25/06

(54) **AIRCRAFT PASSENGER ACTIVITY MONITORING**
FLUGGASTAKTIVITÄTSÜBERWACHUNG
SURVEILLANCE D'ACTIVITÉ DE PASSAGER D'AÉRONEF

(30) Priority: 04.04.2016 US 201662317667 P; 04.04.2016 US 201662317694 P
(43) Date of publication of application: 13.02.2019
(73) Proprietor: B/E Aerospace, Inc., Wellington, FL 33414 (US)
(72) Inventor: GARING, Francis Xavier L., Wellington Florida 33414 (US); STEPHENS, Benjamin, Wellington Florida 33414 (US); POZZI, Alexander Nicholas, Wellington Florida 33414 (US); GU, Jae Hun, Wellington Florida 33414 (US)
(74) Representative: Algemeen Octrooi- en Merkenbureau B.V.
(86) International application number: PCT/US2017/025936
(87) International publication number: WO 2017/176748

(56) References cited:
- DE-A1-102004 025 319
- JP-A- H06 255 592
- US-A1- 2008 068 220
- US-A1- 2010 308 166
- US-A1- 2015 241 209
- US-B1- 7 812 716

## Description

The invention relates to a passenger activity monitoring system for an aircraft cabin according to the preamble of claim 1. Such passenger activity monitoring system for an aircraft cabin is for example disclosed in DE 10 2004 025 319. In JP-H062-55592, an operating device mounted on the seat side of a cabin seat is disclosed, allowing the passenger to arbitrarily operate the reclining seat device, the leg rest, and other functional devices configured in the seat. US-2008/068220 describes a monitoring method for monitoring a seat status in an aircraft, wherein a seat occupancy status of a seat element is measured using a seat occupancy sensor, and the fastening status of the seat element is measured by a fastening sensor and both transmitted to a monitoring device. US-2010/308166 describes an aircraft passenger seat with at least one seat element as well as a monitoring apparatus for monitoring the seat element. US-2015/241209 describes an apparatus to monitor the occupied space within a container volume.

### BACKGROUND

As part of a pre-flight check or, conversely, in preparation for landing (e.g., taxi, takeoff, and landing (TTOL)), aircraft cabin attendants are required to confirm that tray tables are in stowed position, stowage bins are closed, and other monument doors (e.g., galley storage bays, storage closets, etc.) are closed. The manual checks and passenger reminders can be time consuming.

Stowage compartments may allow occupants of vehicles, such as aircraft, to store objects within the vehicle during travel. Such objects may include luggage, media, clothing, and other personal items which travelers may carry onto the vehicles. Aircraft may be sensitive to weight loads and to weight distributions. Aircraft loads may be distributed within storage compartments according to certain guidelines. The weight of passengers may also be distributed within the available seating. Flight attendants and crew may conduct visual inspections to ensure that passengers and object loads are distributed satisfactorily.

A single commercial aircraft may contain many passenger seats. Passenger seats may include seat cushions and/or upholstery coverings. The cushions and upholstery may be supported on the seat by a diaphragm or other supporting members. The passenger seats may be arranged in rows or they may be arranged in individual suites. Some seats may recline while other seats may be fixed. In some long-haul flight applications, for example, the seats may fold out into a sleeping surface. During aircraft travel, passengers may be required by safety rules and/or laws to remain in their seat, for example, during TTOL. Aircraft attendants and crew may conduct visual inspections to ensure passengers remain in their seats at the appropriate times.

### SUMMARY OF ILLUSTRATIVE EMBODIMENTS

In a preferred embodiment, a crew information system is defined in accordance of the characterizing features of claim 1. If the vehicle seat sensor subsystem senses a passenger on a seat and senses the corresponding passenger seat belt is unbuckled, the vehicle seat sensor subsystem may alert the flight crew of a non-compliance condition. The crew information system may also, for example, facilitate preparation for take-off by signaling the crew when, for all seats in which passengers are detected, all tray tables are stowed and all seatbelts are buckled. The crew may be similarly informed of overhead bins which are not properly latched. Crew member notifications may advantageously report the specific nonconforming issue and seat or bin position.

In illustrative embodiments, a weight detection device having a seat cushion deflection sensor is configured to measure a real-time passenger loading in each of a plurality of passenger seats in an aircraft cabin. In an illustrative example, the deflection sensor may be positioned under a bottom cushion of an airplane seat. The deflection sensor may provide, for example, a weight detection signal according to a change in resistive output in response to weight loads placed on the seat cushion. The weight detection signal may be read, for example, by processing circuitry such as a headend computing subsystem of the aircraft. In response to the weight detection signal, the processing circuitry may be configured to alert passengers, attendants, and/or crew of the presence, weight, and/or location of location of passengers within the passenger seats, which may advantageously reduce the time and labor required to inspect each seat for safety compliance during taxi, take-off, and landing, for example.

Some apparatus and associated methods relate to a weight detection device made up of a floating floor structure resting on a force sensitive support device within an aircraft overhead stowage compartment. In an illustrative example, the force sensitive support device may be positioned between the floating floor structure and the overhead stowage compartment subfloor. The force sensitive support device may provide, for example, an object detection signal based on, for example, a change in resistive output in response to weight loads placed on the floating floor structure. The object detection signal may be read, for example, by processing circuitry such as an aircraft headend computer processing subsystem. In response to the object detection signal, the processing circuitry may be configured to alert passengers, attendants, and/or crew of the presence, weight, and/or location of objects within the vehicle stowage compartment to prevent, for example, unintentional abandonment of passenger's luggage or other personal effects.

Further apparatus and associated methods relate to a weight detection device made up of an electronic flex sensor integrated into a pocket positioned in a diaphragm of an aircraft vehicle seat. In an illustrative example, the electronic flex sensor may provide an object detection signal, for example, based on a change in a resistive output in response to a weight load placed on the vehicle seat. In some examples, the resistive output is read by processing circuitry. In an illustrative example, an aircraft headend computer processing subsystem may read the output of the object detection signals and may alert passengers, attendants, and/or crew of the presence, absence, weight, and/or location of passengers within the passenger seats.

Various embodiments may achieve one or more advantages. For example, in some embodiments, processing circuitry may calculate and display a loaded and an unloaded state of some or all of the passenger seats on an aircraft based on the values received from an array of sensors operatively coupled to each of the passenger seats. The processing circuitry may also calculate and display, for review by the flight crew, the intensity and/or distribution of loads among the passenger seats. In some embodiments, the weight detection system may enable attendants and/or flight crew to balance passenger carry-on loads within an array of vehicle stowage compartments. Some implementations may alert, such as by visual indication for example, passengers or flight crew of items remaining in the stowage compartments, for example, to reduce the rate of unintentionally abandoned items left behind during deplaning.

According to some embodiments, the weight of stowed objects in an overhead compartment may be calculated and reported. In some embodiments, the relative loading or load gradient over the compartment floor may be calculated and reported.

Some seat sensor embodiments may sense and report passengers' seating status, such that the flight crew may automatically determine if passengers are seated during appropriate times such as taxi, take off, landing (TTOL), substantially reducing manual and visual checks. In some examples, the weight detection device may facilitate the determination of weight distribution of seated passengers about the passenger cabin, and may provide an indication of when portions of a vehicle seat need to be replaced or repaired due to wear.

In some embodiments, a flight crew may detect the presence of passengers in their seats from a central electronic display, without walking down the aisles of the aircraft to visually inspect each seat, advantageously improving the efficiency of in-flight operations. In some embodiments, the ability to determine intensity and frequency of applied loads may assist in predicting the life of certain seat related wear items, such as dress covers, cushions, and diaphragms.

In various examples, the integration of the sensor into a cushion supporting a diaphragm may allow the system to be integrated into a number of different seat structures without changing the way the sensor is integrated. The same system may be applied in a static economy seat as well as an articulating business, first class, or lie-flat seat. Furthermore, the sensor/diaphragm may be replaced independently from the rest of the seat structure in case of seat damage or wear.

In some examples, the processing circuitry may determine the load intensity of the aircraft vehicle seat, based the set of values received from the resistive flex sensor. The flight control system may receive the load distribution information, and generate therefrom optimizations of the flight control (e.g., trimming surfaces) and/or aircraft dynamic response characteristics to optimize flight performance, safety, and/or fuel economy, for example.

In a preferred embodiment, position sensors may be installed within or upon aircraft cabin fixtures to identify when aircraft apparatus is in a stowed position and when the apparatus is in deployed position. In some examples, the cabin apparatus can be a tray table, stowage bin, work table, movable tablet computer or monitor, or other equipment that must be stowed for taxi, takeoff and landing (TTOL) but may be deployed in flight.

A variety of sensors may be mounted onto or within equipment to monitor position. A gyroscopic sensor or gyro sensor may be used to identify the orientation of an object having the sensor. An orientation sensor provides information regarding position in comparison to a reference plane. Examples of orientation sensors include rotary encoders and inclinometers. A Hall effect sensor may be used to determine proximity to a magnetic field, which can be translated to a range of positions. Other proximity sensors include optical, capacitive, and inductive proximity sensors. In a simpler embodiment, a reed switch is opened or closed by a magnetic field, such that a binary position (e.g., in this orientation, not in this orientation) may be readily determined based upon a switch position. In another simple embodiment, an optical switch may be used to determine whether a beam of light has been broken, which can translate to whether certain equipment is in a particular position or not.

Selection of a type of position sensor may depend upon particular use scenario. For example, for open to close motion of a bin door, an orientation sensor such as a Hall sensor or Reed switch may be used with a magnet incorporated, for example, into the stowage bin to identify proximity. However, a magnetic sensor may be less desirable in a tray table because electronic equipment such as laptop computers and tablet computers are commonly set upon the tray table surface. In this case, a gyro sensor or rotary encoder may be preferable. For example, a rotary encoder may be built into the translation arm of the tray table to track rotational movement between stowed and deployed position and vice-versa. However, if the tray table is instead an armrest-deployed tray table, a magnetic sensor may be more practical since the magnet can be installed proximate to the bottom of the tray table rather than proximate the work surface of the tray table.

The position information may be collected, in some implementations, by a cabin attendant console or wireless application shared by cabin attendant portable devices. In another example, the position information may be collected by an over-the seat mounted passenger service unit. In a further example, the position information may be connected by control circuitry of a business class or luxury class passenger suite.

The foregoing general description of the illustrative implementations and the following detailed description thereof are merely exemplary aspects of the teachings of this disclosure, and are not restrictive.

### BRIEF DESCRIPTION OF THE DRAWINGS

The accompanying drawings, which are incorporated in and constitute a part of the specification, illustrate one or more embodiments and, together with the description, explain these embodiments. The accompanying drawings have not necessarily been drawn to scale. Any values dimensions illustrated in the accompanying graphs and figures are for illustration purposes only and may or may not represent actual or preferred values or dimensions. Where applicable, some or all features may not be illustrated to assist in the description of underlying features. In the drawings:
FIG. 1A depicts a member of a flight crew interfacing with an exemplary weight sensor system;
FIG. 1B is a block diagram of an exemplary weight sensor system;
FIG. 1C is a system diagram of an example computing system for collecting and using load data related to a number of aircraft cabin fixtures;
FIG. 2 depicts a perspective view of a stowage support structure of an exemplary vehicle overhead bin sensor subsystem;
FIG. 3 depicts an elevation view of an exemplary vehicle seat sensor subsystem;
FIG. 4 depicts a plan view of an exemplary vehicle seat sensor subsystem;
FIG. 5 depicts a plan view of an exemplary vehicle overhead bin sensor subsystem illustrating a local indicator panel;
FIG. 6 depicts a perspective view of an exemplary vehicle seat sensor subsystem illustrating a local indicator panel;
FIG. 7 depicts a seat load deflection graph illustrating exemplary seat deflection over time;
FIG. 8 depicts a seat load deflection graph illustrating exemplary seat deflection over time;
FIG. 9 illustrates an example graphical user interface identifying locations of a number of sensors reporting load-related information;
FIG. 10 illustrates an example passenger service unit (PSU) including indicators related to load data received from nearby aircraft cabin fixtures;
FIGs. 11A and 11B are a series of block diagrams illustrating a tray table having a position sensor according to a first embodiment;
FIGs.12A and 12B illustrate an example tray table with a position sensor encased therein;
FIGs. 13A and 13B illustrate an example stowage bin having a position sensor according to a second embodiment;
FIG. 13C illustrates an example stowage bin having a position sensor according to a third embodiment;
FIG. 14A is a block diagram of example circuitry to collecting position information from a number of sensors and reporting position information via a user interface;
FIG. 14B is a block diagram of example components of an example sensor;
FIG. 15 is a system diagram of an example computing system for collecting and using position data related to a number of aircraft cabin fixtures;
FIG. 16 is a flow chart of an example method for collecting and using position data related to a number of aircraft cabin fixtures;
FIG. 17 illustrates an example passenger service unit (PSU) including indicators related to position data received from nearby aircraft cabin fixtures; and
FIG. 18 illustrates an example graphical user interface identifying locations of a number of sensors reporting improper positioning.

### DETAILED DESCRIPTION OF ILLUSTRATIVE EMBODIMENTS

The description set forth below in connection with the appended drawings is intended to be a description of various, illustrative embodiments of the disclosed subject matter. Specific features and functionalities are described in connection with each illustrative embodiment; however, it will be apparent to those skilled in the art that the disclosed embodiments may be practiced without each of those specific features and functionalities.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments. Further, it is intended that embodiments of the disclosed subject matter cover modifications and variations thereof.

It must be noted that, as used in the specification and the appended claims, the singular forms "a," "an," and "the" include plural referents unless the context expressly dictates otherwise. That is, unless expressly specified otherwise, as used herein the words "a," "an," "the," and the like carry the meaning of "one or more." Additionally, it is to be understood that terms such as "left," "right," "top," "bottom," "front," "rear," "side," "height," "length," "width," "upper," "lower," "interior," "exterior," "inner," "outer," and the like that may be used herein merely describe points of reference and do not necessarily limit embodiments of the present disclosure to any particular orientation or configuration. Furthermore, terms such as "first," "second," "third," etc., merely identify one of a number of portions, components, steps, operations, functions, and/or points of reference as disclosed herein, and likewise do not necessarily limit embodiments of the present disclosure to any particular configuration or orientation.

Furthermore, the terms "approximately," "about," "proximate," "minor variation," and similar terms generally refer to ranges that include the identified value within a margin of 20%, 10% or preferably 5% in certain embodiments, and any values therebetween.

All of the functionalities described in connection with one embodiment are intended to be applicable to the additional embodiments described below except where expressly stated or where the feature or function is incompatible with the additional embodiments. For example, where a given feature or function is expressly described in connection with one embodiment but not expressly mentioned in connection with an alternative embodiment, it should be understood that the inventors intend that that feature or function may be deployed, utilized or implemented in connection with the alternative embodiment unless the feature or function is incompatible with the alternative embodiment.

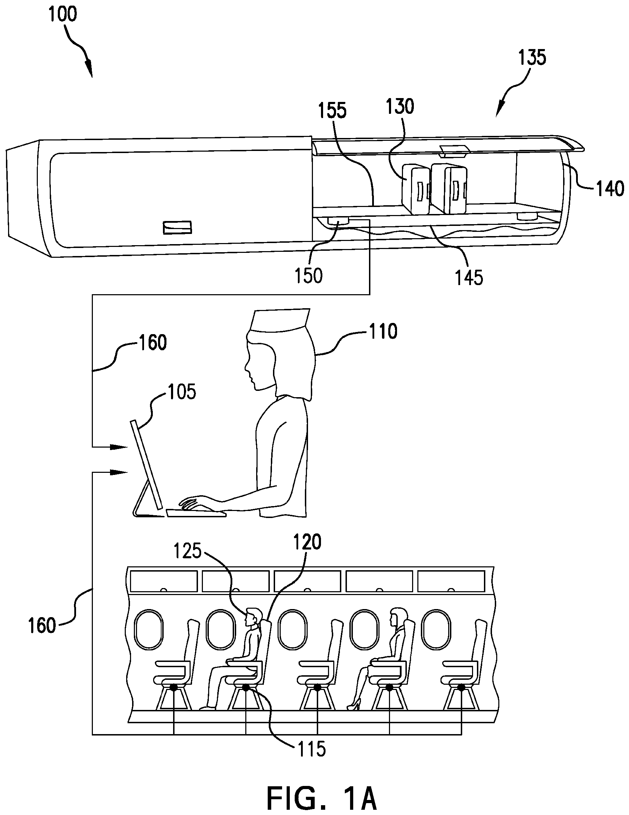

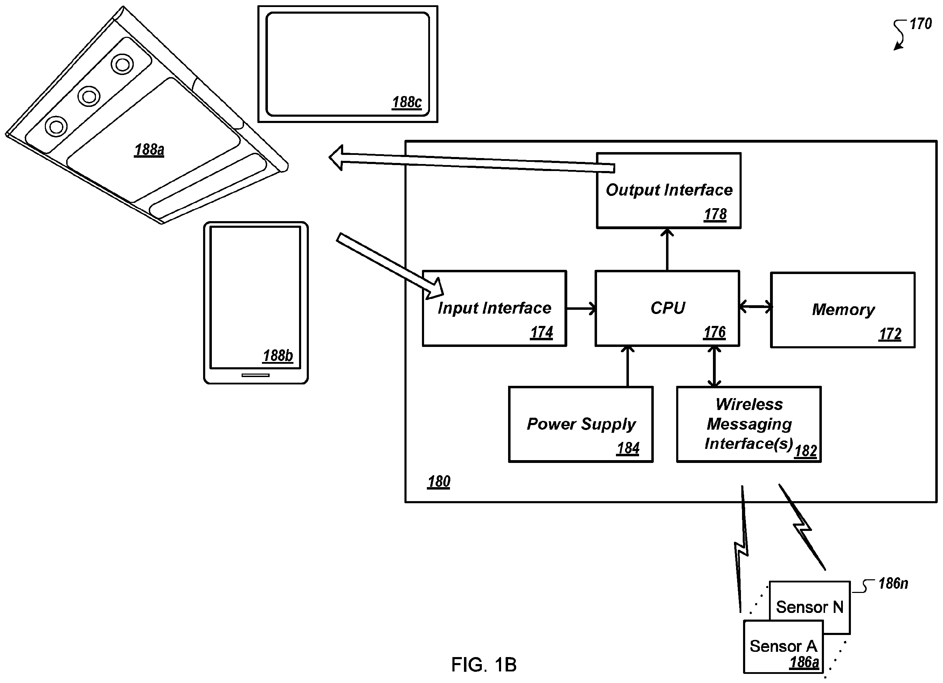

FIG. 1A depicts a member of a flight crew interfacing with an exemplary weight sensor system. Aboard an aircraft, a weight sensor system 100 includes a user interface 105, illustrated as being monitored by a flight attendant 110. The user interface 105, for example, may communicate with an aircraft computing system 170, illustrated in FIG. 1B, which is electrically connected to, and receives signals from, a collection of seat sensors 186 such as seat sensor 115 of FIG. 1A. The seat sensor 115 is integrated into a passenger seat 120. The weight of a passenger 125 translates through the cushion of the passenger seat 120 applying force to the seat sensor 115. The seat sensor 115, for example, changes its electrical resistance in response to the force from the weight of the passenger 125 applied to the passenger seat 120. In this manner, a crew member can access, review, log, and/or analyze information about the presence, absence, and/or weight, for example, for any selected one or more of the passenger seats in the aircraft.

In the depicted figure, the passenger 125 stows a carry-on item 130 within an aircraft overhead compartment 135. The overhead compartment 135 includes a compartment sidewall 140. The compartment sidewall 140 supports a compartment subfloor 145. The compartment subfloor 145 supports a force sensor 150. The force sensor 150 supports a floating floor board 155. The floating floor board 155 supports the carry-on item 130. The force sensor 150 and the seat sensor 115, in some embodiments, include an electrical lead 160. The electrical lead 160, for example, may connect to processing circuitry such as the computing system 170 of FIG. 1B. In other embodiments, the force sensor 150 and/or the seat sensor 115 include a wireless transmitter to wirelessly transmit information to the computing system 170.

In some embodiments, the floating floor board 155 is disposed above the compartment subfloor 145 in a floating arrangement where the floating floor board 155 is not fixedly attached to the compartment subfloor 145 but rather floats above the compartment subfloor 145. The floating floor board 155 may move slightly in a direction perpendicular to the planar top surface of the compartment subfloor 145.

In an illustrative example, the weight of the carry-on item 130 may impose a force upon the force sensor 150. The force sensor 150 may change its electrical resistance in response to the weight force from the carry-on item 130. The computing system 170 may receive a signal from the force sensor 150 in response to the weight of the carry-on item 130.

In some examples, one or more force sensors 150 may be disposed beneath the overhead compartment 135 between the floating floor board 155 and the compartment subfloor 145. In some examples, dedicated force sensor 150 may be employed for each overhead compartment 135. Each of the force sensor 150 may be in contact with a bottom surface of the floating floor board 155 and a top surface of the compartment subfloor 145.

In some embodiments, the force sensor(s) 150 may be fixedly attached to the compartment subfloor 145 or to the floating floor board 155. In some examples, the force sensor(s) 150 may be fixedly attached to both the compartment subfloor 145 and to the floating floor board 155.

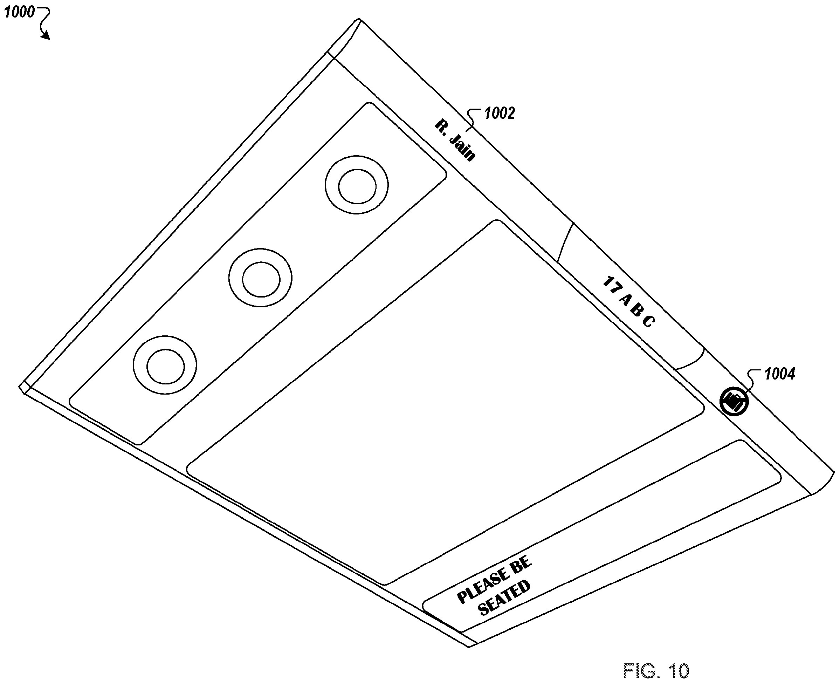

In an illustrative example, a vehicle may include one or more overhead compartments 135. Each one of the overhead compartments 135 may include the force sensor(s) 150 disposed within the overhead compartment 135 between the floating floor board 155 and the compartment subfloor 145. Each of the force sensors 150 located within particular overhead compartments 135 may define a group of force sensors 150 which may be associated with the particular overhead compartment 135. Further, in some embodiments, the force sensor(s) 150 may be associated with a particular passenger service unit (PSU), such as a PSU 1000 illustrated in FIG. 10.

In some examples, a group of force sensors 150 may include a force sensor 150 in each corner of the floating floor board 155 located within the overhead compartment 135. Each group of force sensors 150, which may be associated with the particular overhead compartment 135, may be in electrical communication with the PSU and/or the computing system 170. The computing system 170 may be in electrical communication with one or more groups of force sensors 150. The computing system 170 may include one or more software engines, such as a graphical user interface (GUI) processing engine 114, configured to display data from each of the groups of force sensors 150, for example upon the display 105.

In some embodiments, the processing system 170 may be in electrical communication with individual force sensors 150 and display data from each of the force sensors 150 upon a display device, for example, as a heat map format. In a heat map display format, a high load point can be visually identified by, for example, a color intensity or other graphical representation of amplitude.

In some embodiments, a stowage area may be beneath a passenger seat may be monitored for object weight loading, for example. According to such an embodiment, the aircraft seat rails or legs may attach the aircraft seat to the passenger cabin subfloor. Further, according to such an embodiment, the carpet, panel, wood, or other finished flooring surface may be supported by one or more force sensors 150.

In some examples, the carry-on items 130 may be sensed using one or more infrared (IR) transceiver pairs. According to such an example, an IR transmitter may be fixedly attached to the overhead compartment side wall 140, and may point inward across the floating floor board 155. If the light from the IR transmitter is blocked by the carry-on items 130, the IR receiver may not receive the light from the IR transmitter and thus may detect objects in the overhead compartment 135. In some examples, one or more IR receiver pairs may be employed within the overhead compartment 135, and may be arranged vertically, for example, to detect available space above present objects within the overhead compartment 135. In some examples, one or more IR receiver pairs may be employed within the overhead compartment 135, and may be arranged horizontally, for example, to detect available space in front of or behind present objects within the overhead compartment 135. Using such examples, passengers and crew may advantageously fill all available space within the overhead compartment 135. In some embodiments, a mirrored or reflective surface points may be used to reflect a single beam along a multi-segment optical path. If the bin is empty, the beam will be arranged to transit from an emitter to a detector via a multi-segment path that includes reflections off one or more reflective surfaces within the stowage compartment. If a beam transmitted by the emitter is not received by the detector, then a signal may be generated to, for example, the headend computer system 105, to indicate that an object is in the stowage compartment.

In an illustrative example, sensing within the overhead compartments 135, in conjunction with a processing system, may alert gate personnel of overhead compartment occupancy, which may advantageously direct gate personnel to restrict passengers from carrying on certain items, for example, when the stowage capacity of the stowage compartments on the aircraft passes a predetermined threshold limit. Restricting passengers from carrying on items they may not be able to stow within the passenger cabin may advantageously speed boarding procedures.

The load signals issued by the sensors 115, 150, in some implementations, are collected by control circuitry such as a programmable logic controller (PLC) or central processing unit (CPU) that executes one or more software processes and outputs load information to other controllers and electronically-activated components. FIG. 1B provides a simplified hardware block diagram of control circuitry 180 of a load monitoring system 170. The description of the control circuitry 180 is not meant to be limiting, and can include other components than those described herein. References to control circuitry 180 relate to the circuitry of one or more processing circuits, which can also be referred to interchangeably as processing circuitry. The control circuitry 180 may include a central processing unit (CPU) or other processing circuitry 176 that executes one or more software processes associated with the system 170. Software instructions for the processes can be stored in memory 172. The memory 172 can include both volatile and non-volatile memory and can store various types of data associated with executing the processes related to collection of load signals from a number of sensors 186a through 186n. The control circuitry 180 includes an input interface 174 for communicating with various devices 188 that provide configuration and settings inputs to the control circuitry 180 such as passenger service unit(s) 188a, personal electronic device(s) 188b, and console display(s) 188c, as well as any other device associated with the system 170. The control circuitry 180 also includes an output interface 178 for connecting and providing information to devices 188 communicating with the control circuitry 180 including the passenger service unit(s) 188a, personal electronic device(s) 188b, and console display(s) 188c, as well as any other device communicating with the control circuitry 180. For example, the output interface 178 may be configured to wirelessly communicate with a ground terminal such as a boarding terminal computing system to coordinate loading of the aircraft with ground personnel. The control circuitry 180 also includes a power supply 184, such as a battery connection or wired connection to an electrical power source within the aircraft cabin. Further, the control circuitry 180 includes one or more wireless and/or wired messaging interfaces 182 that enable the control circuitry 180 to collect sensor signals supplied by the sensors 186.

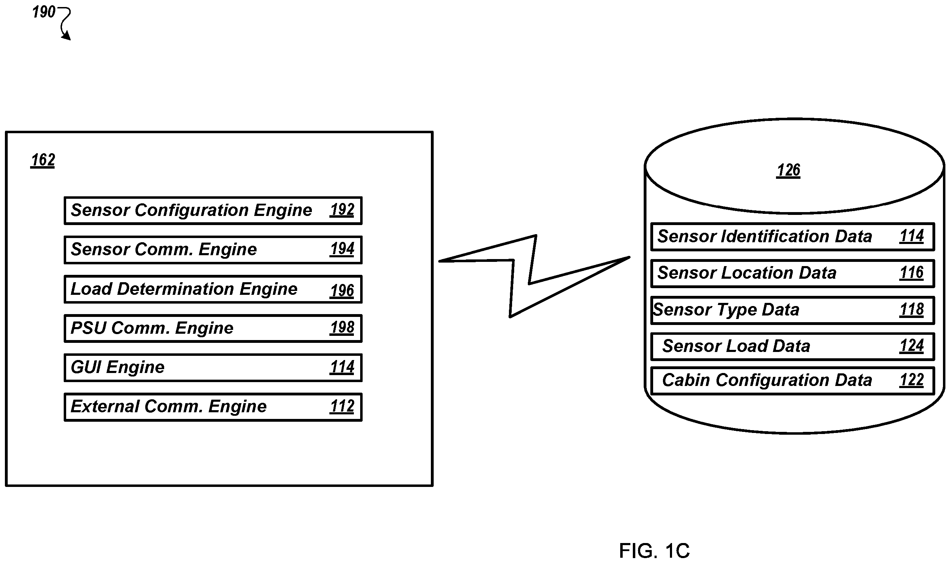

In some implementations, the memory 172 of the control circuitry 180 includes instructions for executing one or more engines or modules that perform processes associated with collecting and interpreting messages provided by the sensors 186 and communicating information regarding the sensor system to the devices 188. Turning to FIG. 1C, an example data processing and storage configuration for the system 170 is presented. In some implementations, the software processes associated with a processing system 190 can be executed by the control circuitry 180, and data 126 generated by the engines 162 of the processing system 190 may be stored in the memory 172 or in another separate non-transitory computer readable medium.

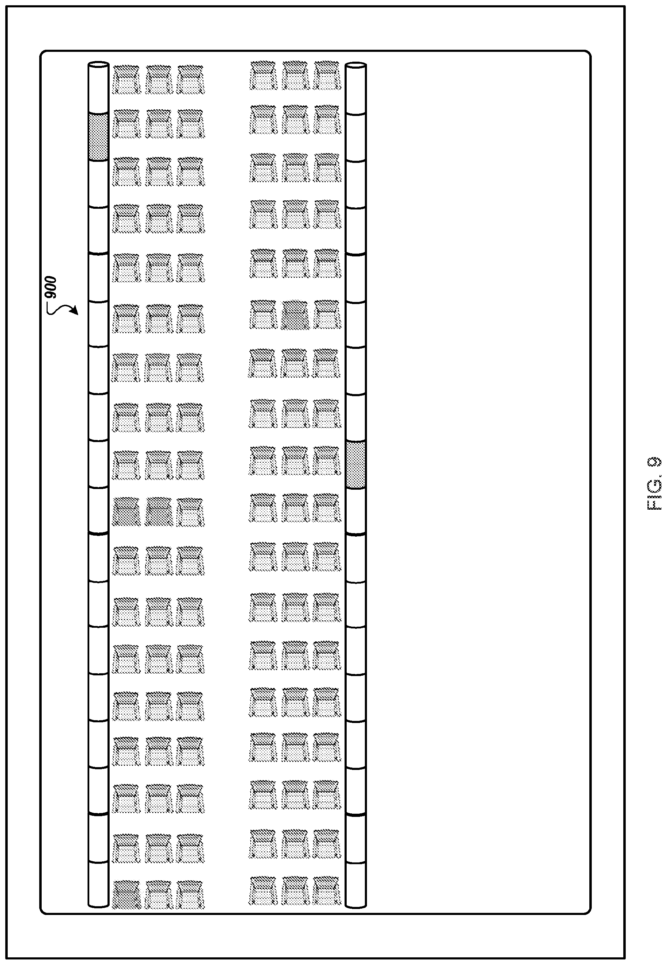

In some embodiments, sensor locations of particular sensors within the aircraft cabin are configured using a configuration engine 192. For example, the sensors may be configured, upon installation within the aircraft cabin, to map each sensor to a position within a cabin map, such as the cabin map displayed in an example graphical user interface (GUI) 900 of FIG. 9. For example, mapping between sensor identification and sensor location may be achieved through mapping based upon cabin configuration data 122 which identifies a particular cabin layout (e.g., number of rows, number of seat groupings per row, seat identifiers within the seat groupings, etc.). Upon initial activation of each individual sensor 186, for example, the sensor 186 may initiate communications with the system 180. For example, a given sensor 186 may initiate communications through issuing a signal including a unique identifier which is recognized by a sensor communication engine 194. The sensor communication engine 194, for example, may be configured to communicate using a number of wireless protocols used by the sensors 186 such as, in some examples, Bluetooth, ZigBee, or Ultra Wide Band (UWB). A user may map the sensor position of each newly communicating sensor to a particular location. In another example, a computer-readable code such as a bar code or a QR code positioned upon the sensor unit or the apparatus in which the sensor unit is embedded may be scanned and assigned to a particular cabin location identifier (e.g., seat 18G or bin 24). The correspondence between the unique identifier and/or computer readable code (e.g., sensor identification data 114) and the assigned location identifier (e.g., sensor location data 116) may be stored in a non-transitory computer readable data store 126. In a particular example, the location identifier may be assigned through scanning the computer readable code, and then selecting the location within a graphical map presented by a graphical user interface engine 114 based upon the cabin configuration data 122 (see, e.g., FIG. 9). Further, in some implementations, the sensor 186 may broadcast a sensor type (e.g., tray table, stowage bin, etc.). In another example, the sensor location data 116 may be automatically indicative of type (e.g., a passenger seat location corresponds to a tray table, while a stowage bin location corresponds to a stowage bin). In further embodiments involving, for example, a number of load sensors deployed within a single luxury class suite, the sensor type data 118 may be populated by a user upon setup of the individual sensors.

In some implementations, in collecting signals from the sensors 186, the sensor communication engine 194 polls individual configured sensors 186 for the current position information. In other implementations, the sensor communication engine 194 may listen for signals from periodically broadcasting sensors 186. Polling may increase battery life of battery-operated sensors 186, while listening may simplify design of the sensors 186 (e.g., each sensor may simply be designed to transmit rather than managing a communication handshake with the sensor communication engine 194).

The sensor communication engine 194, in some implementations, provides the sensor load data 124 to a load determination engine 196. The load determination engine 196, for example, may translate signals received from individual sensors 186 to sensor load data 124. The load determination engine 196, for example, may review a number of consecutive signals to determine whether stable load data was received (e.g., the load was not fluctuating due to a young passenger bouncing in the seat, the reading was not adversely effected by turbulence, etc.). Stable load information may be stored to the computer readable data store 126 as sensor load data 124.

In some implementations, rather than communicating with individual sensors 186, sensor load data 124 is retrieved from a number of localized processing systems, such as the PSU 188a or a passenger suite computing system. For example, localized processing systems may perform the tasks of the sensor communication engine 194 and the load determination engine 196, and even the sensor configuration engine 192, while a PSU communication engine 198 receives sensor load data 124 as well as one or more of sensor identification data 114, sensor location data 116, and sensor type data 118 from the PSU 188a or passenger suite computing system and stores the data for use by the GUI engine 114.

In some implementations, a flight attendant or other crew member reviews the sensor load data 124 via a graphical user interface presented by the GUI engine 114 (for example at the console 105 illustrated in FIG. 1A). The GUI, for example, may be similar to the GUI 900 of FIG. 9. Turning to FIG. 9, the GUI interface 900 illustrates graphically locations in a cabin area having missing passengers and/or empty stowage bins. The locations, in some examples, may be identified graphically through a modified color, highlighting, flashing the corresponding icon bright and dim or on and off, enlarging an icon, or other graphical symbol indicating a location in the cabin having an improperly stowed cabin feature. As illustrated, 4 passenger seat locations and two stowage bins are illustrated in a contrasting color to portray the load status.

In some embodiments, the processing circuitry 180 of FIG. 1B may communicate load information regarding the overhead compartments 135 of FIG. 1A via an external communication engine 112 to a ground computing terminal managed by gate personnel and vice-versa. For example, the communication link between the processing circuitry 180 and the ground personnel may allow airlines to take reservations for overhead compartment space. According to such an example, airline personnel may transmit a passenger's name in relation to an overhead compartment 135, and the processing circuitry 180 may in turn communicate reservation status to the PSU 188a. In response, the PSU 188a may display the passenger's name below the selected overhead compartment 135 using, for example, a pico projector established within or upon the stowage bin, which may advantageously allow paying passengers to reserve areas within certain overhead compartments, and may be an additional source of revenue for airlines. Alternatively, the reservation information may be displayed upon the PSU 188a itself. For example, turning to FIG. 10, the PSU 1000 includes a name indicator 1002 identifying passenger "R. Jain" as having a reservation for an overhead stowage bin.

Returning to FIG. 1A, in some embodiments, the force sensors 150 may be turned off when not in use, to save power. For example, in the circumstance of battery powered force sensors 150, the sensors may be disabled or placed into a "sleep mode" when not in use through wireless communications with the control circuitry 180 of FIG. 1B. In another example, the force sensors 150 may be wired to a local PSU, such as PSU 188a of FIG. 1B, and the PSU may activate/deactivate the force sensors 150 based, for example, on current flight status. Conversely, in some embodiments, the force sensors 150 may be kept on and active, to continually monitor the overhead compartment space.

In some implementations, the processing circuitry 180 of FIG. 1B may communicate load information regarding the seat sensors 115 of FIG. 1A via the external communication engine 112 of FIG. 1C to a ground computing terminal managed by gate personnel and vice-versa. For example, the communication link between the processing circuitry 180 and the ground personnel may allow gate personnel working with standby passengers to monitor indications of available seats, which may advantageously automate and speed up the standby boarding process. In some embodiments, this communication may happen via an aircraft computer.

In an illustrative example, members of the flight crew may receive an indication from the weight sensor system 170 of the long-term vacancy of a seat, which may indicate the seat is available for passengers requesting re-seating.

Airlines may find benefit in embodiments that log statistical data regarding passenger seating. For example, true loading of an aircraft may be available across multiple flights and multiple days, which may advantageously allow airline business operations visibility regarding profitability. In another example, loading patterns may be monitored based upon time stamps associated with sensed loads within one or both of the overhead compartments and the passenger seats.

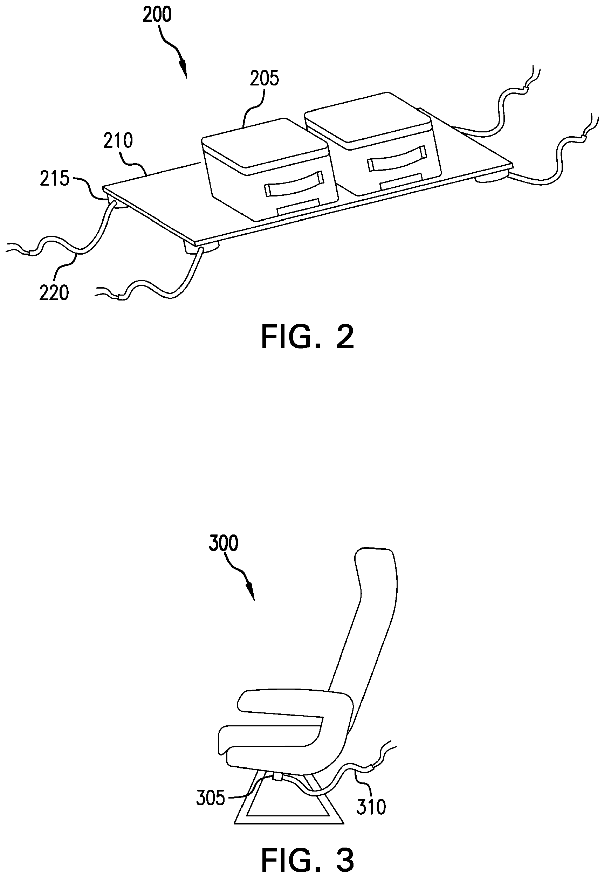

FIG. 2 depicts a perspective view of a stowage support structure of an exemplary vehicle overhead bin sensor subsystem (vehicle overhead bin sensor subsystem). A vehicle overhead bin sensor subsystem 200 is depicted with passenger carry-on items 205. The passenger carry-on items 205 are resting upon a stowage support structure 210. The stowage support structure 210 rests upon a group of force sensors 215, for example force sensitive resistors. The force sensors 215 couple to an electrical lead wire 220. In some embodiments, the stowage support structure 210 may rest upon the force sensors 215 placed in each corner of the stowage support structure 210. For example, the force sensors 215 may behave as "feet" holding up a shelf so that the force sensors 215 use the support structure 210 as a scale for weighing the carry-on items 205. In some embodiments, the stowage support structure 210 may be located within an overhead bin.

In some implementations, each of the force sensors 215 may be designed to change its output resistance or capacitance in response to the presence or absence of an object, for example, the carry-on item 205. The presence or absence of the object, on top of the stowage support structure 210 within a stowage compartment, detected by the force sensitive resistors 215, may be relayed to control circuitry. The control circuitry may cause display of the presence or absence of the object in a particular stowage compartment via a graphic display, such as on a display region of the cabin console 105 of FIG. 1A or a display region 1004 of the PSU 1000 of FIG. 10 (illustrating an icon indicative of an empty bin, e.g., "no luggage"). Passengers or flight crew members may view the display to identify the presence or absence of the objects placed in the stowage compartments. In some embodiments, the force sensors 215 may be arranged to maximize the detection of objects. In some examples, the force sensors 215, in conjunction with the control circuitry, may also calculate the location of the objects within the stowage compartment. This location calculation may be displayed, for example, by the control circuitry in a graphical user interface for cabin attendant review.

In some embodiments, the force sensors 215 may not only detect the presence or absence of carry-on items 205, but may also send a weight indication of the carry-on items 205 within the stowage compartment. This weight indication indicated by the force sensors 215 may be relayed to the processing circuitry, where the weight may be calculated and may be revealed on the display of the cabin console, for example. In some embodiments, the employment of multiple force sensors 215, in conjunction with the control circuitry, may calculate a weight gradient across the stowage support structure 210.

In an illustrative example, the control circuitry may be pre-programed to alert passengers, flight attendants, and/or crew of the presence of carry-on items 205 which may be left behind in stowage compartments, based on data received from the groups of force sensors 215. Such alerts may advantageously help passengers ensure they are in possession of all their belongings and may prevent accidentally leaving luggage or other carry-on items 205 behind. For example, a warning may be displayed upon the PSU 1000 of FIG. 10 and/or on the console 105 of FIG. 1A.

In some embodiments, the control circuitry may be pre-programed to alert passengers, flight attendants, and/or crew of the weight distribution of objects placed in one or more stowage compartments, based on data received from the groups of force sensors. Such data may empower the flight attendants and/or crew to accurately redistribute, for example, high load carry-on items within the vehicle to meet desired loading distribution criteria. Further, data related to weight distribution of carry-on items may be transmitted to ground computing systems which may analyze, over time, patterns of weight distribution of carry-on items in passenger cabin regions to determine policies, for example, for carry-on luggage.

FIG. 3 depicts an elevation view of an exemplary vehicle seat sensor subsystem. A vehicle seat sensor subsystem 300 includes a load detector 305. The load detector 305 is electrically connected to a lead 310. The lead, for example, may be a power lead and/or a signal lead. For example, the load detector 305 may receive power from a power source wired to the passenger seat, while communications are issued via wireless transmissions. In another example, the power and communications signals may be provided via the lead 310, for example to a nearby PSU or into a control circuitry interface to a main computing system. The load detector 305 is removably placed within a seat structure. In some embodiments, the vehicle seat sensor subsystem may facilitate detection of the presence and intensity of a seat load through employment of the load detector 305 within the seat structure, such as within a seat diaphragm.

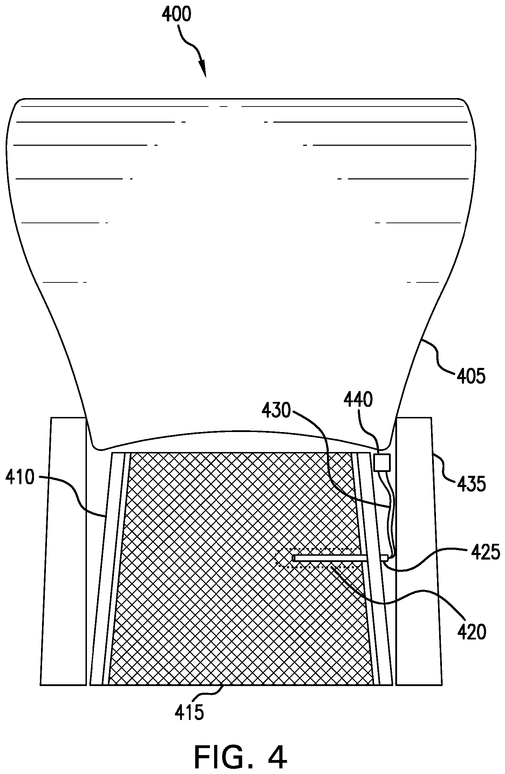

FIG. 4 depicts a plan view of an exemplary vehicle seat sensor subsystem. A passenger seat 400 includes a passenger seat back 405. The passenger seat back 405 is hingedly attached to a passenger seat support frame 410. The passenger seat support frame 410 is fixedly attached to a passenger seat diaphragm 415, spanning the bottom portion of the passenger seat 400. The passenger seat diaphragm 415 incorporates a stitched pocket 420. The stitched pocket 420, for example, may be built within the webbing of the passenger seat diaphragm 415 and may hold a sensor 425 such as a resistive flex sensor. The sensor 425 may include one or more lead wires 430, such as power leads and communication signal leads. As illustrated, signal lead wires 430 are routed past a passenger seat arm 435. The signal lead wires 430 may be electrically connected to a terminal 440. In some embodiments, a signal harness within the passenger seat 400 containing the vehicle seat sensor subsystem may connect the terminal 440 to a cabin computing system. In other embodiments, the terminal 440 may communicate in a wireless or wired manner with a local PSU or other control circuitry.

In some embodiments, the sensor 425 located in the stitched pocket 420 of the seat diaphragm 415 of the passenger seat 400 may detect the presence and intensity of a load (not shown) placed on the seat diaphragm 415. The load may include the presence or weight of a passenger sitting in the passenger seat 400. The sensor 425 may be mounted in the seat diaphragm 415 such that a change in the shape of the surface of the seat diaphragm 415 from a load being placed on the passenger seat 400 may cause the shape of the sensor 425 to change from a substantially straight shape, in response to an unloaded seat state, to a curved shape, in response to a loaded seat state. The sensor 425 may be oriented on the seat diaphragm 415 such that one end of the sensor 425 may be positioned in an area that deflects very little in the presence of a seat load, while the opposite end of the sensor 425 deflects substantially in position and straightness, in the presence of a seat load.

In an illustrative example, when a seat load is applied to the seat diaphragm 415 having the sensor 425 installed in the stitched pocket 420, the sensor 425 changes in resistance as it changes shape from straight (unloaded) to bent (loaded). The change in resistance of the sensor 425 may be detected by a supporting electronic circuit, for example, an analog to digital converter (ADC), to allow the digital data to represent the state of the sensor 425 over time. The sensor 425 may be connected to control circuitry by the signal lead wires 430 and a terminal 440. The control circuitry may compare the resistance value of the resistive flex sensor 425 in states of seat loaded and seat unloaded. The control circuitry may detect and record the presence and intensity of a passenger seat load. The passenger seat load values may ultimately be analyzed to display load information to a cabin attendant at the display console 105 as shown in FIG. 1A.

In some embodiments, the integration of the sensor 425 into the seat diaphragm 415 may allow the system to be integrated into a number of different seat structures without changing the manner in which the sensor 425 is integrated. In some embodiments, the vehicle seat sensor subsystem within the passenger seat 400 may be applied in a static economy seat as well as an articulating business or first class seat. In an illustrative example, the sensor 425 and the seat diaphragm 415 may be replaced independently of the rest of the structure of the passenger seat 400, in case of damage or wear, for example.

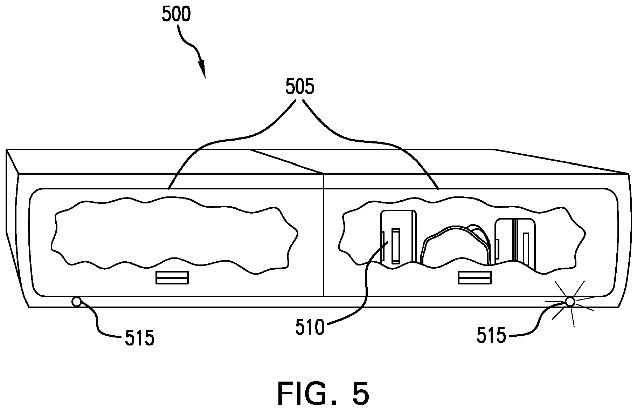

FIG. 5 depicts a plan view of an exemplary vehicle overhead bin sensor subsystem illustrating a local indicator panel. An overhead storage compartment 500 includes two compartment hatch covers 505. The compartment hatch covers 505 secure passengers' carry-on items 510. Each half of the overhead storage compartment 500 includes an indicator lamp 515. In an illustrative example, the indicator lamp 515 may light to indicate the presence of carry-on items within that half of the overhead storage compartment 500, and may extinguish to indicate the absence of carry-on items within that half of the overhead storage compartment. In some examples, the overhead storage compartment may be unitary, and may include a single indicator lamp. In some embodiments, the indicator lamp 515 may be employed in communication with control circuitry of a PSU or headend computer system, such as the processing circuitry 180 of FIG. 1B.

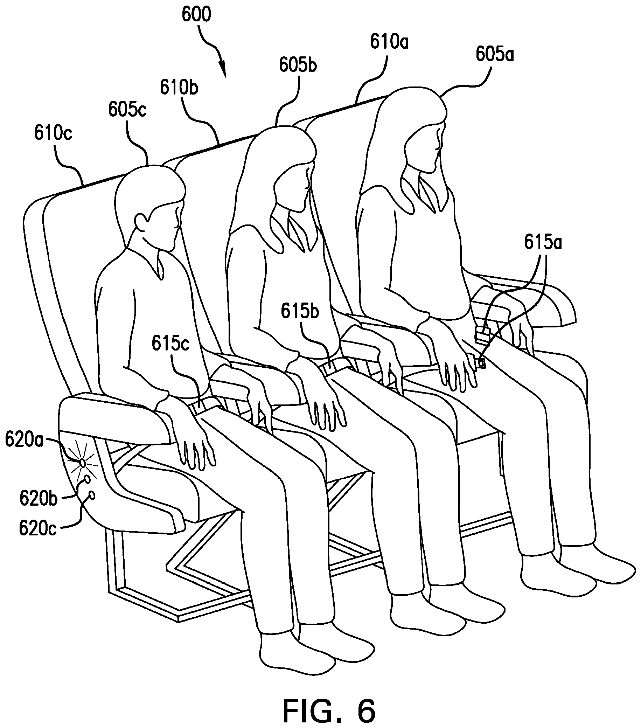

FIG. 6 depicts a perspective view of an exemplary vehicle seat sensor subsystem illustrating a local indicator panel. A triple passenger seating arrangement of a vehicle seat sensor subsystem 600 includes three passengers 605a, 605b and 605c. The three passengers 605a, 605b and 605c are seated in passenger seats 610a, 610b and 610c. The passenger seats 610a, 610b and 610c include three sets of seat belts 615a, 615b and 615c including integrated sensors configured to detect a buckled status. The seat belt sensors, for example, may be proximity sensors for confirming that the buckle is in the slot. The aisle passenger seat 610c includes indicator lamps 620a, 620b and 620c for indicating noncompliance with seat belt fastening.

In an illustrative example, where each seat 610a, 610b and 610c may contain a sensor (FIG. 4 reference 425) integrated into the seat diaphragm (FIG. 4 reference 415), and where each seat 610a, 610b and 610c may also contain a seat belt status sensor, local control circuitry may illuminate the indicator lamps 620a, 620b and 620c when a seat load is detected concurrently with an unbuckled seat belt detection. The indicator lamps 620a, 620b and 620c may advantageously facilitate flight crew safety checks. Although illustrated on the side of an aisle-mounted passenger seat, in other implementations, the indicator lamps may be presented upon a PSU above the passengers 605, such as the PSU 1000 described in relation to FIG. 10. Further, the sensors may transmit information to control circuitry for presenting information at a flight crew display, such as display 105 of FIG. 1.

In an illustrative embodiment, when the vehicle seat sensor subsystem 600 senses a passenger on a seat, for example, seat 610a, and senses the corresponding passenger seat belt, for example 615a, is unbuckled, the vehicle seat sensor subsystem 600 may alert the flight crew of a compliance nonconformity.

In some examples, when the vehicle seat sensor subsystem 600 senses a passenger getting out of their seat during TTOL procedures, the vehicle seat sensor subsystem may alert the flight crew of a compliance nonconformity. In an illustrative embodiment, when the vehicle seat sensor subsystem 600 senses a passenger (e.g., 605b) on a seat (e.g., 610b) during TTOL, then senses that same passenger 605b, getting out of their seat 610b, the flight crew may be alerted.

In some examples, sensors may be placed within a tray table in order to sense the deployment state of the tray table. As described, for the stowage compartments and the seats, a sensor within the tray table may alert the flight crew of the stowage state of specific passengers' tray tables.

In an illustrative embodiment, the vehicle seat sensor subsystem 600 may alert the flight crew with a "cabin check okay" status. The "cabin check okay" may be generated by the vehicle seat sensor subsystem 600 when the following conditions occur simultaneously within a passenger compartment area: all tray tables report that the tables are stowed, and all seatbelts report that the corresponding passenger is buckled (for seats with a sensed passenger present). The "cabin check okay" signal may advantageously provide assistance to flight crews for TTOL compliance checks. Further, a noncompliant seat position may be detected by the vehicle seat sensor subsystem 600, and may advantageously report the specific nonconforming issue and seat position. In such examples, a member of the flight crew may personally check that seat position for the specific nonconforming issue and for remediation of the issue.

In some embodiments, proximity detectors, for example, as employed on automobile bumpers, may be employed beneath a seat, facing forward. The detectors may sense nearby objects. The vehicle seat sensor subsystem 600 may map these objects. Further, complementary detectors may face backward from the forward row of seats and complete a detection subsystem. In an illustrative embodiment, when the map of objects in front of each seat is consistent with legs and no bags, a "rows clear" signal may be sent to the flight crew. The signal may be incorporated within the same vehicle seat sensor subsystem 600.

In various examples, signal combinations of sensor outputs from load sensors within storage compartments, load sensors within passenger seats, and proximity sensors within tray tables may be employed by, for example, a headend computer executing preprogramed instructions, within an aircraft to provide other advantageous alerts to a flight crew.

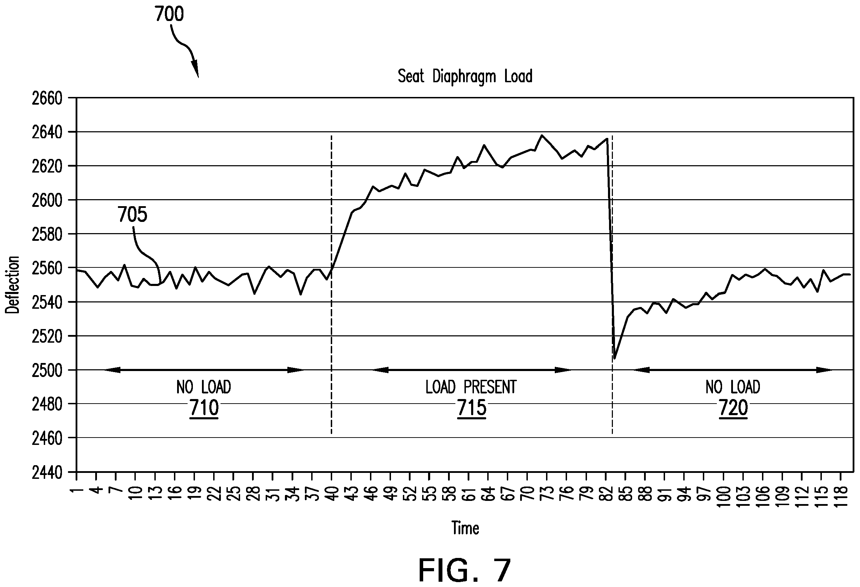

FIG. 7 depicts a seat load deflection graph illustrating exemplary seat deflection over time. A seat diaphragm loading graph 700 includes a seat sensor output 705 as a function of time. The seat sensor output 705 is relatively low under no seat load conditions 710. The seat sensor output 705 is relatively high under seat loaded (e.g., load present) conditions 715. The seat sensor output 705 returns to a relatively low output when the seat is once again no longer loaded 720. In an illustrative example, an analog to digital converter (ADC) may be employed with a pre-programmed microcontroller to advantageously read the seat sensor output 705 and to determine and report seat loading status conditions based, for example, on a running average of signals recorded in the seat sensor output 705. Further, in some implementations, control circuitry may discard errant signals from the seat sensor output 705, such as one or more signals outside of a threshold range of immediately neighboring signal data over time. In some embodiments, control circuitry may convert sensor output 705 to a weight estimate. In other embodiments, control circuitry may simply identify presence or absence of load.

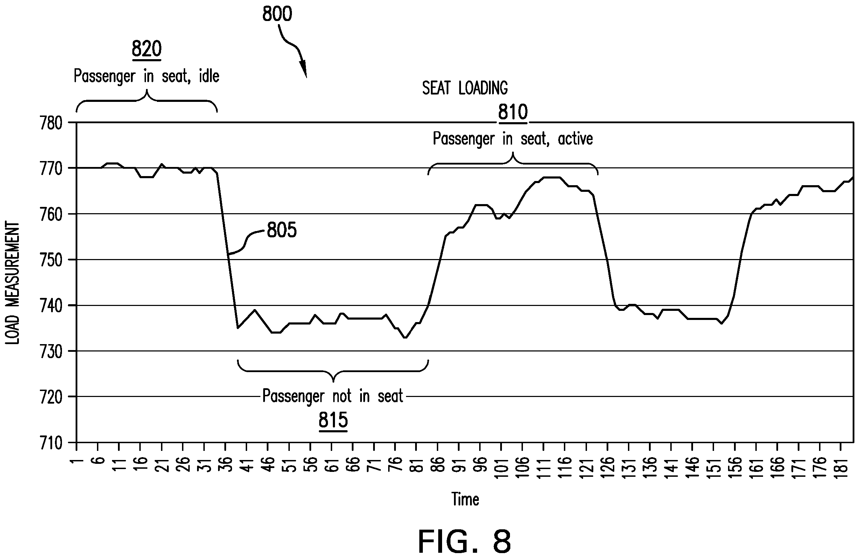

FIG. 8 depicts a seat load deflection graph illustrating exemplary seat deflection over time. A seat diaphragm loading graph 800 includes a seat sensor output 805 as a function of time. The graph illustrates an example of the load measurement data output by such a sensor, which may be employed to detect passenger load and/or activity. Regions of high load fluctuation 810 may correlate to passenger activity or vehicle turbulence, while regions of low fluctuation 815 may correlate to idle passenger states. Additionally, areas of increased load at a substantially steady state 820 may correlate to an inactive passenger present in the seat.

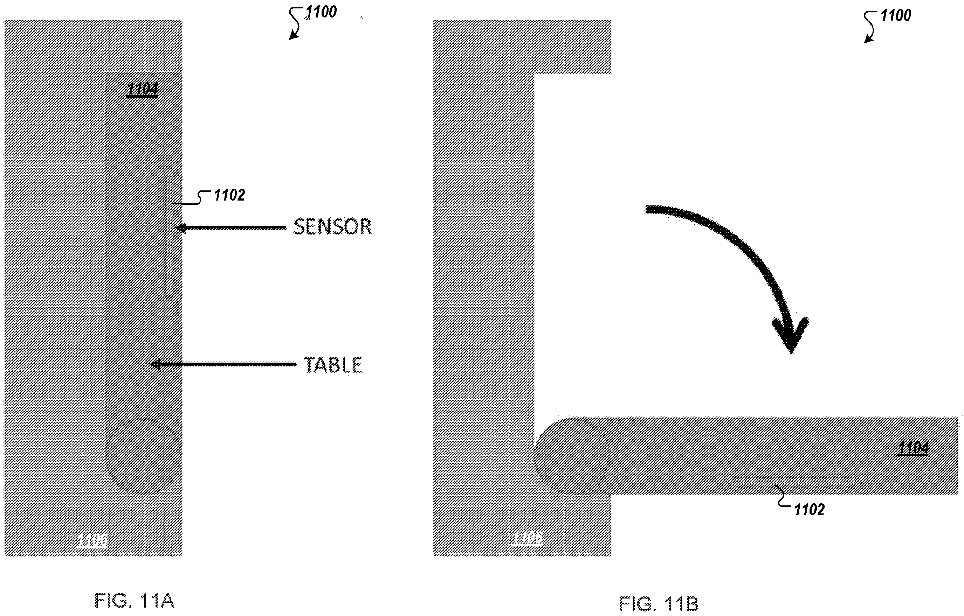

FIGs. 11A and 11B show a series of illustrations demonstrating movement of a sensor 1102 installed upon or embedded within a tray table 1104, which is mounted to a cabin fixture 1106 (e.g., passenger seat back, passenger suite partition, class divider monument, etc.). As illustrated, in FIG. 11A, in a stowed position 1100, the sensor 1102 is in a substantially vertical alignment, while the tray table 1104 is similarly substantially vertically aligned with the cabin fixture 1106. As illustrated in FIG. 11B, when the tray table 1104 is deployed, both the tray table 1104 and the sensor 1102 are in a substantially horizontal position. By mounting the sensor 1102 in or on the tray table 1104, the sensor 1102 can issue signals indicating whether the tray table 1104 is in the deployed position. In this manner, cabin attendants may be alerted of tray tables which are not properly stowed when needed (e.g., at taxi, takeoff, and landing (TTOL)).

The sensor 1102, in some implementations, is a gyro sensor or other orientation sensor configured to recognize a substantially vertical alignment (e.g., stowed position) as opposed to a substantially horizontal alignment (e.g., deployed position). Because tray tables are typically not configured for partially-deployed (e.g., angled) positioning, the sensor 1102 may be a binary sensor that determines between a first position and a second position.

Although illustrated as a drop-down tray table, in implementations involving an armrest deployable tray table or side of the passenger seat deployable tray table, the same teachings may be used since the stowed position will still be substantially vertical while the deployed position is substantially horizontal.

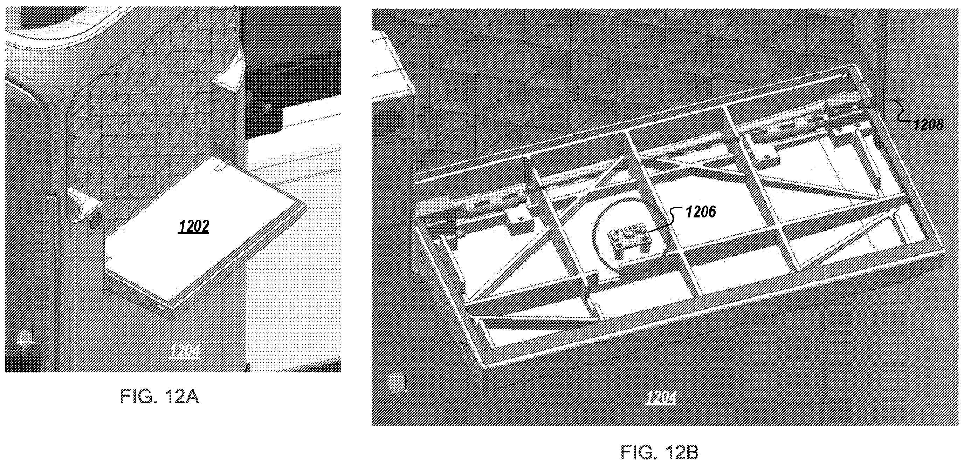

The position of the tray table can be more difficult for cabin attendants to discern, for example, in the circumstance of business class or luxury class suites, where the tray tables are within an enclosed or semi-enclosed partition surrounding the passenger suite. Turning to FIGs. 12A and 12B, for example, a tray table 1202 mounted in a passenger suite partition 1204 is illustrated in the deployed position. In a cutaway illustration of FIG. 12B, a sensor 1206 is illustrated mounted in a substantially centered location within the tray table 1202. The sensor 1202, in some examples, may be a gyroscopic sensor, Hall effect sensor, or another type of orientation sensor. The sensor, for example, is configured to discern movement from a stowed position to a deployed position about an axis of rotation 1208. In other examples, the sensor 1202 may be a proximity sensor that determines proximity of the tray table to the surface the tray table stows against (e.g., a suite partition, seat back, or aircraft monument). For example, a magnet may be embedded within or upon the stowing surface that will trigger a magnetic field-enabled sensor such as a Hall effect sensor or Reed switch.

In some implementations, the sensor 1206 may include a power source (e.g., battery). Alternatively, the sensor may connect to a local power supply, such as a power supply delivered to the tray table 1104 to enable wireless charging of devices or the power supply to one or more charging ports mounted in the tray table 1204, such as USB charging ports for charging personal electronic devices.

In some implementations, the sensor 1206 may include a wireless transmitter for transmitting position information to a remotely located receiver. The transmitter may periodically transmit position information. In another example, the antenna may act as a transmitter/receiver for receiving signals from control circuitry and responding with position information. For example, control circuitry may poll sensors, via wireless transmitters, for position information. Further, control circuitry may issue activation and deactivation signals to the position sensors to conserve battery by only monitoring during active flight times.

In various implementations, the sensor 1206 may be connected via a wire to control circuitry. For example, in circumstances where electrical signals may be run through the tray table 1202, the sensor 1206 may be linked into the wire conduit, directly delivering sensor signals to control circuitry, such as a passenger suite controller.

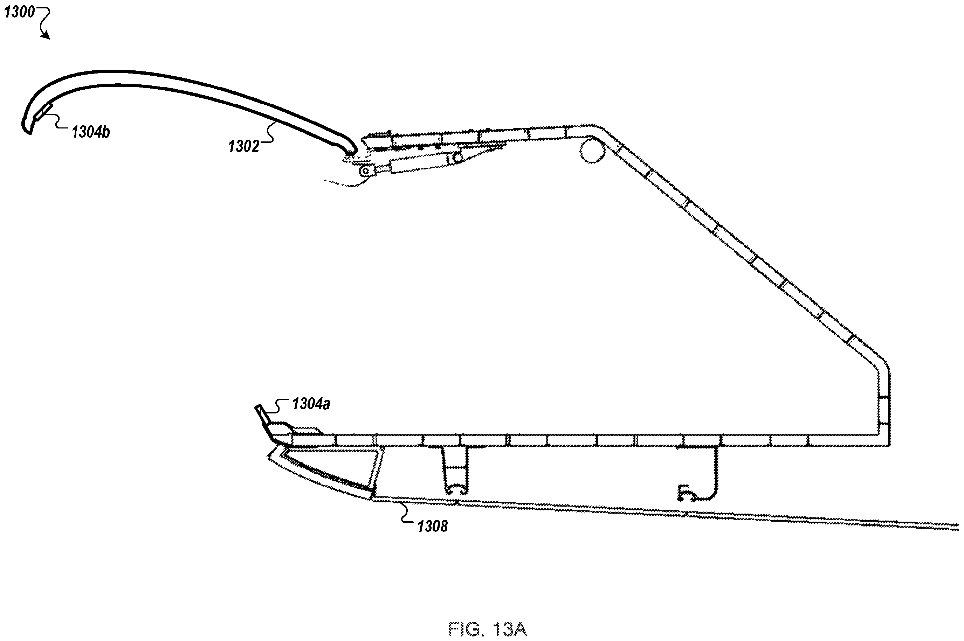

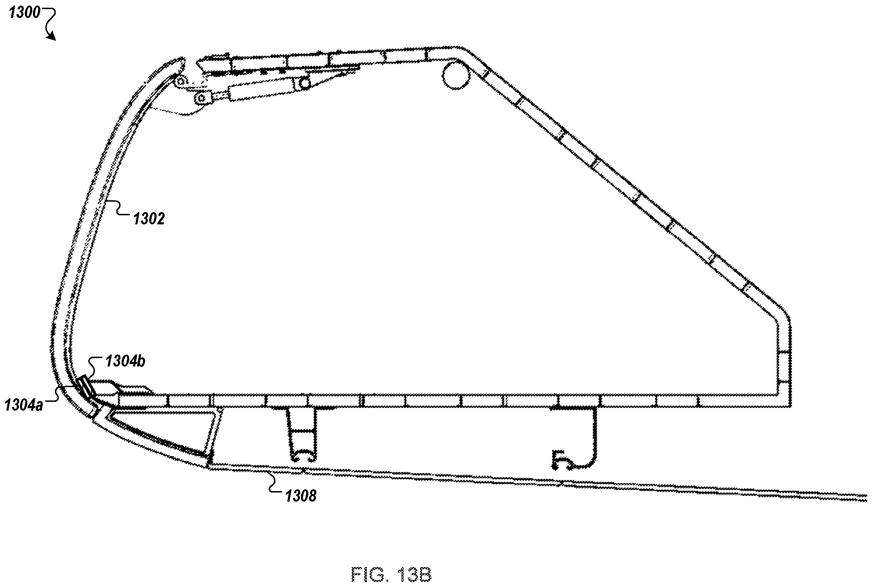

Turning to FIGs. 13A and 13B, in some implementations, a position sensor 1304 is mounted upon a door 1302 of an overhead stowage bin 1300. As illustrated, the sensor 1304 is presented in two parts, a bin-mounted sensor mechanism 1304a and a corresponding door-mounted sensor mechanism 1304b. The sensor 1304, for example, may be a proximity sensor configured to identify when the two sensor mechanisms 1304a, 1304b are in close proximity to each other. In this manner, even if the bin door 1302 is oriented in a substantially downward position, the sensor will not report that the bin door is stowed until the sensor mechanisms 1304a, 1304b are sufficiently close together to trigger a signal. In one example, the sensor 1304 is a Hall effect sensor or Reed switch, requiring sensing of a magnetic field to trigger a signal indicative of the stowed position. In another example, the sensor 1304 is an optical sensor requiring optical feedback from the paired sensor mechanism to trigger a signal indicative of the stowed position. In some embodiments, verification of bin closure may be accomplished by a position detector switch integrated in a mechanical latch mechanism of the bin door 1302 and/or the stowage bin 1300.

Although illustrated as being mounted to surfaces of the stowage bin, in other implementations, one or both of the sensor mechanisms 1304a, 1304b may be embedded within features of the stowage bin. For example, the bin door-mounted sensor mechanism 1304b may be mounted between the interior surface and the exterior surface of the bin door 1302, while the mating sensor mechanism 1304a may be mounted within a latching mechanism of the stowage bin 1300.

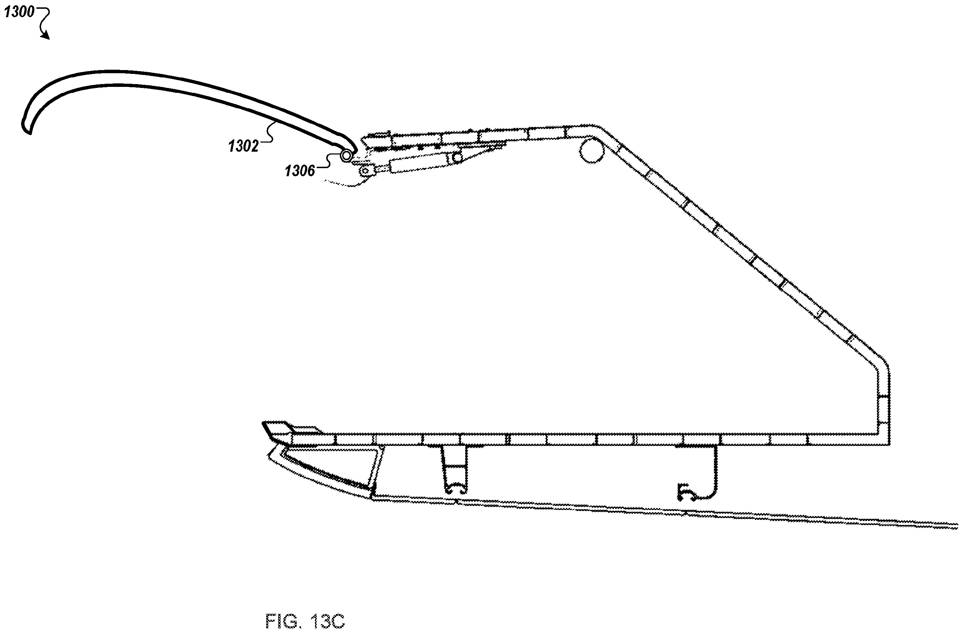

Turning to FIG. 13C, in an alternative embodiment, a sensor 1306 may be built into a hinge mechanism of the bin door 1302. The sensor 1306, in some examples, may be a flex sensor or potentiometer providing electrical resistance correlating to a hinge position. For example, the signal of a flex sensor or potentiometer may correspond to an amount of deflection or bending of the sensor based upon the current state of the bin door. The flex sensor may be installed, for example, behind the hinge so that it flexes like a stick of gum while the bin door 1302 is rotated upward and downward. In its downward most position, the resistance in the flex sensor will be at its greatest, issuing the strongest position signal. Further, the sensor 1306 may be a rotary encoder built into the hinge mechanism and configured to recognize positioning in the fully latched orientation. For example, a rotary encoder may be an absolute encoder identifying a particular hinge angle which corresponds to the stowed and latched position.

In some implementations, the sensors 1304 or 1306 draw power from a nearby PSU or an electrical feed provided for overhead lighting. For example, sensor mechanism 1304a may be the active sensor portion, while sensor mechanism 1304b may be a passive element (e.g., a magnet or a reflective surface providing optical sensor feedback). Sensor mechanism 1304b may draw power from a PSU mounted to an underside 1308 of the stowage bin 1302. Conversely, sensor 1306, being an overhead hinge-mounted sensor mechanism, may draw power from an overhead lighting feed.

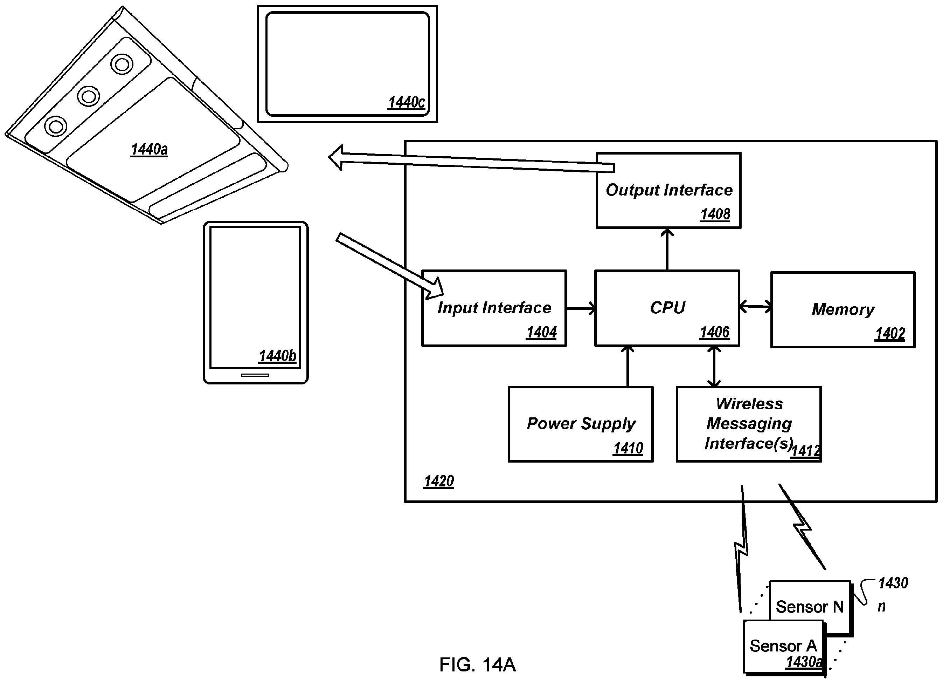

The position signals and/or load signals issued by the sensors, in some implementations, are collected by control circuitry such as a programmable logic controller (PLC) or central processing unit (CPU) that executes one or more software processes and outputs position information to other controllers and electronically-activated components. FIG. 14A provides a simplified hardware block diagram of control circuitry 1420 of a position monitoring system 1400. The description of the control circuitry 1420 is not meant to be limiting, and can include other components than those described herein. References to control circuitry 1420 relate to the circuitry of one or more processing circuits, which can also be referred to interchangeably as processing circuitry. The control circuitry 1420 may include a central processing unit (CPU) 1406 that executes one or more software processes associated with the system 1400. Software instructions for the processes can be stored in memory 1402. The memory 1402 can include both volatile and non-volatile memory and can store various types of data associated with executing the processes related to collection position signals from a number of sensors 1430a through 1430n. The control circuitry 1420 includes an input interface 1404 for communicating with various devices 1440 that provide configuration and settings inputs to the control circuitry 1420 such as passenger service unit(s) 1440a, personal electronic device(s) 1440b, and console display(s) 1440c. and any other device associated with the system 1400. The control circuitry 1420 also includes an output interface 1408 for connecting and providing information to devices 1440 communicating with the PLC 1200 including the passenger service unit(s) 1440a, personal electronic device(s) 1440b, and console display(s) 1440c, and any other device communicating with the control circuitry 1420. The control circuitry 1420 also includes a power supply 1410, such as a battery connection or wired connection to an electrical power source within the aircraft cabin. Further, the control circuitry 1420 includes one or more wireless messaging interfaces 1412 that enable the control circuitry 1420 to collect sensor signals supplied by the sensors 1430.

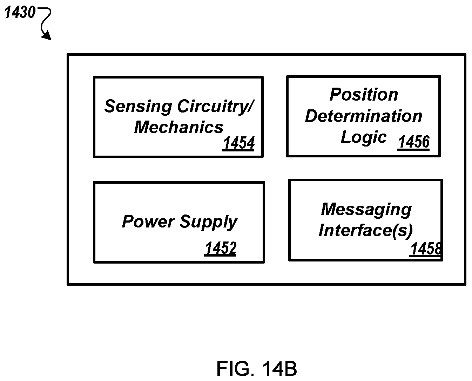

Turning to FIG. 14B, in some implementations, each sensor 1430 includes sensing circuitry and/or mechanics 1454, position determination logic 1456, a power supply 1452, and one or more messaging interfaces 1458. The sensing circuitry and/or mechanics 1454 incorporates components that move a switch or other component or generate a signal generally indicative of a sensor position. As discussed above, the sensing circuitry and/or mechanics 1454 can be as simple as a mechanical device opened and/or closed due to a magnetic field or a mechanical switch, or more complex digital interpretations of acceleration and location in three-dimensional space, such as is determinable using a gyro sensor.

The sensing circuitry and/or mechanics 1454, for example, may include a signal indicative of a present moment position, while position determination logic 1456, in some implementations, translates varying input received from the sensing circuitry/mechanics 1454 into a binary positioned (e.g., stowed vs. deployed) for use by the control circuitry 1420 of FIG. 14A. For example, the position determination logic 1456 may receive signals from the sensing circuitry/mechanics 1454 over time and translate the time series of signals into position information.

The messaging interface(s) 1458, in some implementations, issue wired or wireless signals to control circuitry, such as the control circuitry 1420, for analysis. In the simplest terms, the message interface may include a hard-wired connection over which a voltage signal indicative of a binary output from the sensing circuitry and/or mechanics 1454 (e.g., switch closed vs. switch open) is sent. The wire, for example, may connect to control circuitry configured to translate the binary signal into a position of a particular apparatus. For example, hardwired binary signals may be issued to a PSU controller by nearby stowage bin-mounted sensors, and the PSU controller may translate the signals into bin door positions. In more complex installations, a wireless messaging interface 1450 may share wireless messaging exchanges with remote control circuitry, where the messaging interface 1458 provides a rich set of information including, in some examples, position information, sensor identifier, apparatus type identifier, timestamp, and/or installation location data. For example, the messaging interface 1458 may be configured to monitor wireless messages for a polling message issued by control circuitry addressed to the sensor's unique identifier and respond with a position information message containing at least an indication of present position (e.g., stowed or not stowed). In wireless implementations, the messaging interface 1458 may include, in some examples, one or more of a radio frequency (RF) communication interface, a Bluetooth communication interface, a UWB communication interface, a ZigBee communication interface, and a Wi-Fi communication interface.

The power supply 1452 may be a wired or wireless supply. For example, in some embodiments, the power supply 1452 may be fed by a passenger seat power source or a passenger service unit power source. In other embodiments, a battery provides the power supply 1452. The power supply 1452 may include a power converter to convert incoming power to voltage and/or current usable by the sensor 1430. In another example, the power provided by an external source may be directly compatible with the circuitry of the sensor 1430. While the sensing circuitry/mechanics 1454 may or may not require the power supply 1452, the position determination logic 1456 requires a power source to function. The messaging interface(s) 1458 may or may not require power. For example, passive antennas can derive power directly from a polling device requesting information, thus saving on battery power for a battery-based power supply.

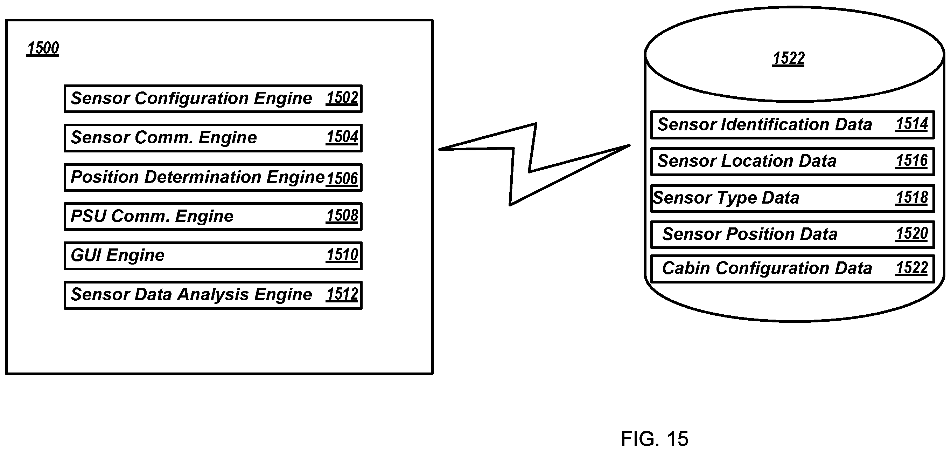

In some implementations, the memory 1402 of the control circuitry 1420 includes instructions for executing one or more engines or modules that perform processes associated with collecting and interpreting messages provided by the sensors 1430 and communicating information regarding the sensor system to the devices 1440. Turning to FIG. 15, an example data processing and storage configuration for the system 1400 is presented. In some implementations, the software processes associated with a processing system 1500 can be executed by the control circuitry 1420, and data 1522 generated by the engines of the processing system 1500 may be stored in the memory 1402 or in another separate non-transitory computer readable medium.

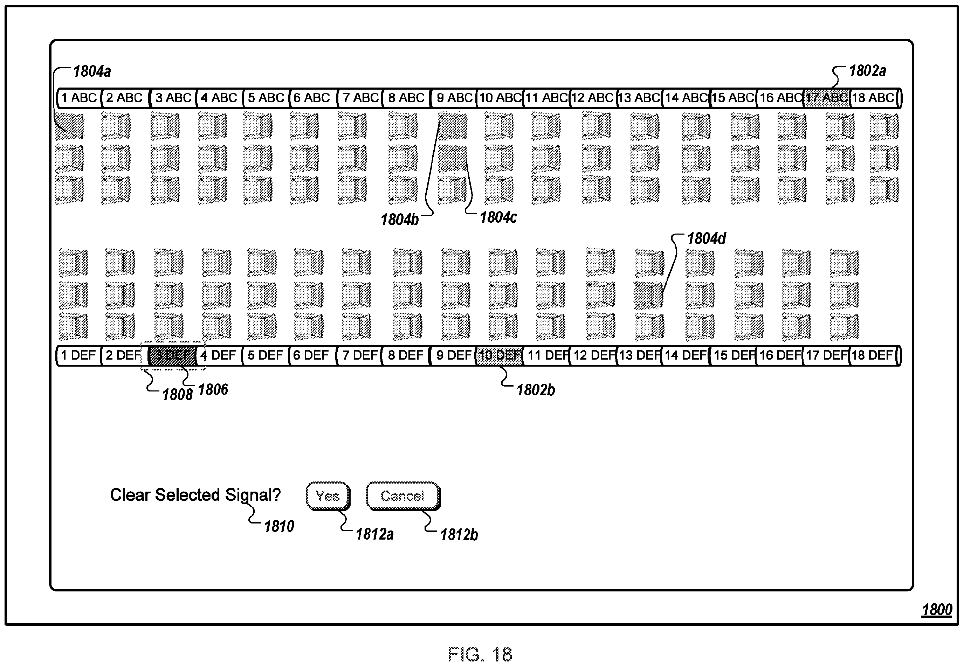

In some embodiments, sensor locations of particular sensors within the aircraft cabin are configured using a configuration engine 1502. For example, the sensors may be configured, upon installation within the aircraft cabin, to map each sensor to a position within a cabin map, such as the cabin map displayed in an example graphical user interface 1800 of FIG. 18. For example, mapping between sensor identification and sensor location may be achieved through mapping based upon cabin configuration data 1522 which identifies a particular cabin layout (e.g., number of rows, number of seat groupings per row, seat identifiers within the seat groupings, etc.). Upon initial activation of each individual sensor 1430, for example, the sensor 1430 may initiate communications with the system 1400. For example, a given sensor 1430 may initiate communications through issuing a signal including a unique identifier which is recognized by a sensor communication engine 1504. The sensor communication engine 1504, for example, may be configured to communicate using a number of wireless protocols used by the sensors 1430 such as, in some examples, radio frequency (RF), Bluetooth, ZigBee, or Ultra Wide Band (UWB). A user may map the sensor position of each newly communicating sensor to a particular location. In another example, a computer-readable code such as a bar code or a QR code positioned upon the sensor unit or the device in which the sensor unit is embedded may be scanned and assigned to a particular cabin location identifier (e.g., seat 18G or bin 24). The correspondence between the unique identifier and/or computer readable code (e.g., sensor identification data 1514) and the assigned location identifier (e.g., sensor location data 1516) may be stored in a non-transitory computer readable data store 1522. In a particular example, the location identifier may be assigned through scanning the computer readable code, and then selecting the location within a graphical map presented by a graphical user interface engine 1510 based upon the cabin configuration data 1522. Further, in some implementations, the sensor may broadcast a sensor type (e.g., tray table, stowage bin, etc.). In another example, the sensor location data 1516 may be automatically indicative of type (e.g., a passenger seat location corresponds to a tray table, while a stowage bin location corresponds to a stowage bin). In further embodiments involving, for example, a number of position sensors deployed within a single luxury class suite, the sensor type data 1518 may be populated by a user upon setup of the individual sensors.

In some implementations, in collecting signals from the sensors 1430, the sensor communication engine 1504 polls individual configured sensors for the current position information. In other implementations, the sensor communication engine 1504 may listen for signals from periodically broadcasting sensors 1430. Polling may increase battery life of battery-operated sensors 1430, while listening may simplify design of the sensors 1430 (e.g., each sensor may simply be designed to transmit rather than managing a communication handshake with the sensor communication engine 1504).

The sensor communication engine 1504, in some implementations, provides the sensor position data 1520 to a position determination engine 1506. The position determination engine 1506, for example, may translate signals received from individual sensors 1430 to sensor position data 1520. The position determination engine 1506, for example, may review a number of consecutive signals to determine whether stable position data was received (e.g., the position was not captured mid-positioning of the tray table or stowage bin door, the reading was not adversely effected by turbulence, etc.). Stable position information may be stored to the computer readable data store 1522 as sensor position data 1520. Although described in relation to sensor position data, in other implementations, a same engine or engines communicating together may determine load information as well as position information, for example as discussed above in relation to FIG. 1C.

In some implementations, rather than communicating with individual sensors, sensor position data 1520 is retrieved from a number of localized processing systems, such as the PSU 1440a or a passenger suite computing system. For example, localized processing systems may perform the tasks of the sensor communication engine 1504 and the position determination engine 1506, and even the sensor configuration engine 1502, while a PSU communication engine receives sensor position data 1520 as well as one or more of sensor identification data 1514, sensor location data 1516, and sensor type data 1518 from the PSU 1440a or passenger suite computing system and stores the data for use by the GUI engine 1510.

In some implementations, load information is provided by the load determination engine 196 of FIG. 1C and combined with position information for analysis by a sensor analysis engine 1512.

The sensor data analysis engine 1512, in some implementations, generates one of more notifications of noncompliance based upon analyzing sensor information related to tray tables, stowage bin doors, passenger seats, seat belts, and/or other deployable fixtures. For example, the sensor data analysis engine may generate a notification of noncompliance based upon identifying that a stowable fixture is not in the stowed position or a passenger is not seated. The position information includes proximity of the seat buckle to the seat belt, indicating whether a passenger has bucked, while load information may identify whether a passenger is seated in that position. In the embodiment of the present invention, a passenger manifest is accessed by the system to determine whether a passenger is assigned for seating in a particular seat position. The passenger manifest is used in analysis by the sensor data analysis engine 1512 to identify a missing passenger or a passenger seated in an unassigned seat.

In some implementations, a flight attendant or other crew member reviews the sensor position information via a graphical user interface presented by the GUI engine 1510. The GUI, for example, may be similar to the GUI 1800 of FIG. 18. Turning to FIG. 18, the GUI interface 1800 illustrates graphically locations in a cabin area having down tray tables and/or open stowage bins. The locations, in some examples, may be identified graphically through a modified color, highlighting, flashing the corresponding icon bright and dim or on and off, enlarging an icon, or other graphical symbol indicating a location in the cabin having an improperly stowed cabin feature. In further examples, the locations may be seating positions with graphical indications of passengers demonstrating seatbelt noncompliance. As illustrated, four passenger seat locations and two stowage bins are illustrated in a contrasting color to portray the position sensor status.

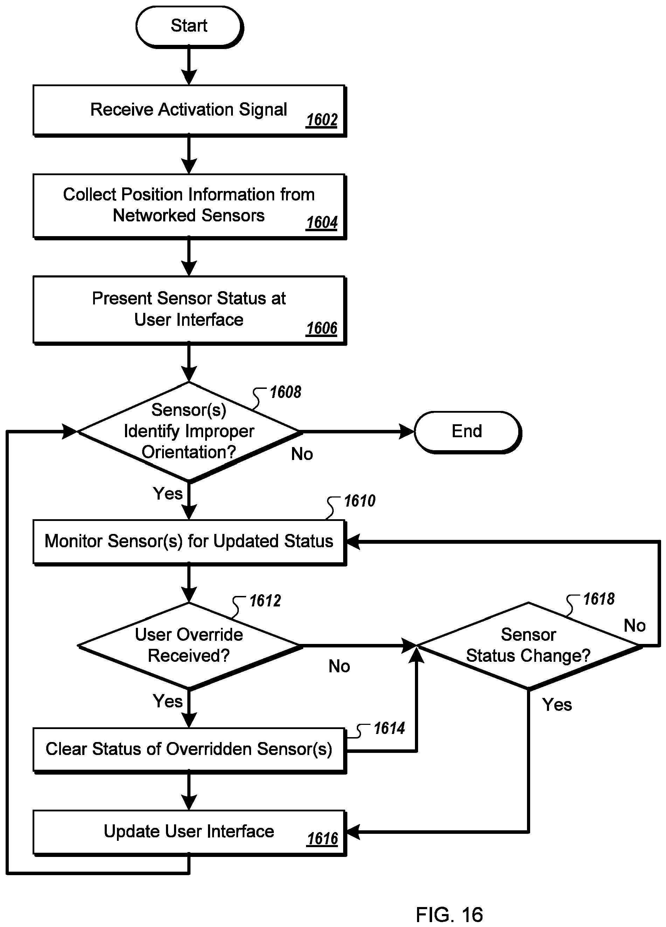

Turning to FIG. 16, a flow chart illustrates in example method 1600 for interfacing with a position monitoring system such as the position monitoring system 1400 discussed in relation to FIG. 14. The method 1600, for example, may be performed by one or more engines of a software system such as the software system 1500 described in relation to FIG. 15.

In some implementations, the method 1600 begins with receiving an activation signal (1602). For example, the position monitoring system may only be activated during times of flight. In a particular example, upon beginning of the boarding process, the activation signal may be issued to monitor load of passengers and preparing for take-off. In other implementations, the position monitoring system may activate upon powering the aircraft cockpit in preparation for flight (e.g., prior to moving the aircraft from the hangar to the terminal).

In some implementations, position information is collected from a number of networked sensors (1604). The information, for example, may be gathered through communicating with wireless and/or wired communication interfaces of each position sensor within the aircraft. In some implementations, at least a portion of the position information is gathered by intermediate control circuitry and provided as collective position information. For example, each business class and luxury class suite may collect individual position information for two or more sensors installed in each suite, and a central controller may collect the position information from the local controller of each passenger suite. Further, a number of passenger service units may collect individual sensor data from nearby stowage bins and/or passenger seats and provide the collected position information to a central controller.

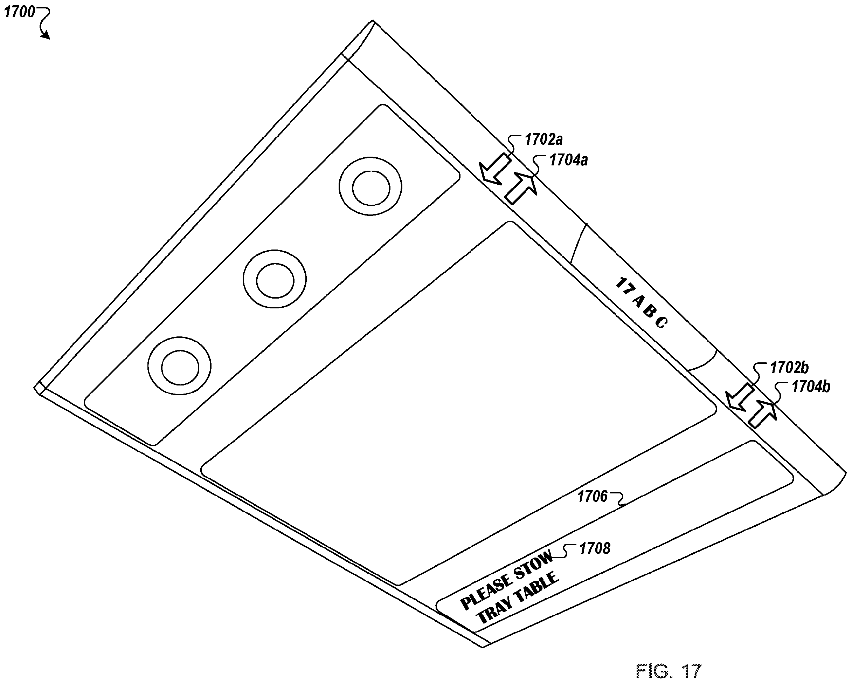

In some implementations, sensor status is presented at a user interface (1606). The sensor status, for example, may indicate either a stowed or deployed position for each apparatus configured with a sensor. In a particular example, turning to FIG. 17, directional arrows 1702, 1704 presented on a face of a passenger service unit 1700 and mounted beneath overhead stowage bins may light to indicate whether the stowage bin is in a locked or unlocked position based upon sensor position information received from sensors deployed on or in the bin door of each stowage bin. Further, as illustrated in a passenger information bar 1706, a message 1708 encourages a passenger to "please stow tray table" responsive to position information from the sensor deployed on or in the tray table of the passenger seat beneath the passenger service unit 1700.

In further embodiments, turning to FIG. 18, a graphical user interface 1800 may be presented at a flight attendant console or upon a flight attendant mobile application for review of a cabin map of deployed apparatus by flight personnel. The graphical user interface 1800 includes highlighted indications of two stowage bins 1802a, 1802b and four tray tables 1804a, 1804b, 1804c, and 1804d in deployed position. Using the cabin map presented in the graphical user interface 1800, for example, the cabin attendant can quickly identify that passenger seats 1C, 9B, 9C, and 13E have deployed tray tables, while stowage bins 10DEF and 17ABC are open.

Returning to FIG. 16, in some implementations, a sensor status corresponding to an inactive or otherwise malfunctioning sensor may be provided to the user interface. For example, as illustrated in FIG. 18, stowage bin 1806 at row 3DEF is highlighted red to indicate a problem with the sensor reading. In some embodiments, the method may further include alerting ground personnel, such as maintenance staff, to the sensor malfunction.

In some implementations, if one or more sensors identify an improper orientation (e.g., deployed rather than stowed) 1608, sensors may be monitored for an updated status. For example, as flight personnel or passengers stow each apparatus, sensor status may correspondingly be updated upon the user interface(s).

In some implementations, a user is provided the opportunity to override the status of one or more sensors. In some examples, a sensor may be supplying inaccurate information due to malfunction, power failure, or improper installation. In a particular example, a corresponding magnet for a Reed switch may become dislodged, causing the position sensor to fail to sense a magnetic field upon moving to the stowed position. In some embodiments, via a user interface such as the graphical user interface of FIG. 18, a user may be provided the opportunity to override the sensor status. For example, as illustrated in FIG. 18, stowage bin 1806 is highlighted by a highlighting marker 1808. A message 1810 asks if the user wishes to clear the signal, and interface controls 1812a, 1812b provide a response mechanism for the user to select whether to clear the errant signal.

If a user chooses to override status of one or more sensors (1612), in some implementations, the status of the overridden sensor(s) is cleared for the corresponding user interface (1614). Further, override at the main console may cause override at local consoles, such as at a passenger service unit or passenger suite. The decision to override status, for example, may apply for the duration that the position sensing system is active, for example until the position sensing system is disabled by a user or the power system to the aircraft is disabled (e.g., when it is returned to the hangar and turned off for the evening).

In other implementations, whether or not a user override is received (1612), in some implementations, the sensors are monitored for any changes in position. If the status of one or more position sensors has changed (1618), in some implementations, the graphical user interface is updated to reflect the change (1616). For example, upon clearing the status of one or more sensors or upon effectively stowing the apparatus, the graphical user interface may be updated to present the new position information.

In some implementations, sensors are continually monitored throughout the duration of flight. In other implementations, once confirming that all apparatus is in the stowed position (1608), the method 1600 may end. For example, the aircraft may be cleared for take-off, and the method 1600 may not need repeating until preparations for landing. In other implementations, sensors may continue to be monitored throughout the duration of the flight. For example, opening of stowage bin doors is discouraged, so upon identifying a bin door in the open state, flight crew may be alerted to monitor the situation.

Although various embodiments have been described with reference to the figures, other embodiments are possible. For example, both the vehicle overhead bin sensor subsystem and the vehicle seat sensor subsystem may be implemented wirelessly. For example, each overhead compartment may employ its own wireless transmitter. In a similar example, each seat may employ its own wireless transmitter. Such a system may allow for straightforward field replaceable units (FRUs), such that field service personnel may find a serviceability advantage.

In some embodiments, the weight sensor system may include a storage compartment that may detect the presence of an object placed within it and may provide alerts to passengers and/or flight crews. The detection of objects may be achieved through employment of force sensitive resistors placed underneath a floating floor in the compartment. The resistance of the force sensitive resistors may change in response to the amount of load applied. By placing the force sensitive resistors underneath a floating floor, they signal the presence of an object as its weight exerts a force on the sensors.

In some examples, multiple sensors may be employed such that objects may be detected in various locations within the compartment. By allowing the floor of the compartment to float, not having it connected rigidly to the surrounding structure of the compartment, the weight of the object placed on it may be directly transferred to the force sensitive resistors that it rests on.

In various examples, the difference in resistance between a loaded sensor (with an object stored inside an overhead compartment) relative to an unloaded sensor (with nothing inside the overhead compartment), may be detected by the vehicle overhead bin sensor subsystem. According to such examples, as long as the stored object has a weight that exerts a force on the floating floor, it may be detected.

In some examples, load detection may provide multiple benefits to the passenger and flight crew. For example, by detecting a stowed object, the system may notify the passenger of an item that has been left behind when deplaning. Detection of objects within storage compartments may also allow for more efficient flight crew operations by allowing safety checks, such as proper carry-on stowage and seat loading, to be conducted from a central location where the states of multiple storage compartment sensors may be displayed, advantageously reducing the labor of checking each individual storage compartment.

In some embodiments, the floating floor may be a finished surface, for example, a plastic finished surface within the stowage compartment. In some examples, the floating floor may be a nonslip surface, and may advantageously hold passenger carry-on objects in place within the stowage compartment.

In some embodiments, a vehicle seat sensor subsystem may determine the intensity and frequency of applied seat loads, which may advantageously assist in predicting the life of certain seat related wearable items, such as stress covers, cushions, and diaphragms.

In some embodiments, a seat load detector may communicate with control circuitry connected via a lead. The control circuitry executing a pre-programmed software application may determine a loaded and an unloaded state of an aircraft vehicle seat based on the values received from the seat load detector. The control circuitry may also determine the intensity of the load placed in the aircraft vehicle seat.

In some examples, a vehicle seat sensor subsystem may signify that a passenger is present in a seat. Flight crews may advantageously leverage this information for pre-flight checks, for example, taxiing, takeoff and landing (TTOL) compliance.

In an illustrative example, the vehicle seat sensor subsystem may detect different types of passenger activity through physical stimuli induced onto a seat, which may then be communicated to a separate system for processing or analysis (e.g., seat controller, cabin head unit, crew mobile device) The detection may allow connected seat systems to react to the different stimuli. In such examples, the vehicle seat sensor subsystem may analyze the rate of change of the load readings through the seat cushions. According to such examples, substantially little fluctuation in seat load readings may indicate an idle passenger that has fallen asleep. Further, the vehicle seat sensor subsystem may signal the cabin crew to perform sleep-related service routines, for example, dimming the lighting and turning off in-flight entertainment, and may advantageously improve passenger experience or crew efficiency.

In some examples, the vehicle seat sensor subsystem may employ load detecting systems to discern between two different passenger load types, for example, a child or an adult. According to such examples, certain electronic amenities may be restricted based on the load type distinction, for example, children may be restricted from using onboard air-phones, or may be restricted from viewing certain video programming.

In some embodiments, the vehicle seat sensor subsystem load detecting system may detect passenger behavior through the determination of levels of activity extrapolated from the variability of the seat load over time. According to such embodiments, these determinations may be used for safety purposes, to assist in crew operations, or for passenger experience related service, for example, to address passenger restlessness or sleep state.

In some examples, an air bladder based seat sensor system may be integrated into an existing seat air bladder system, typically employed for massage features, or for cushion firmness adjustment. The incorporation of the pressure sensor to detect loads in-line with the fluid circuit, already in use for the air bladder system, may advantageously allow two features to be implemented with minimal addition of hardware.

Some embodiments may use a pressure sensitive mat or film with a distributed array of pressure sensors to generate signals representative of object presence detection and/or weight load distribution in, for example, an overhead stowage bin, under a seat pan cushion, a seat back cushion, or on the floorboard under a seat.

In some embodiments, a distance based seat sensor system may be a non-contact method of detecting changes in seat cushion load, which may advantageously remove the limitation for the sensor to be integrated into the seat cushion or supporting structures. In such embodiments, the sensor itself may not be susceptible to mechanical degradation over time since it may not be physically coupled to the seat cushion or any load bearing elements.

Some aspects of embodiments may be implemented as a computer system. For example, various implementations may include digital and/or analog circuitry, computer hardware, firmware, software, or combinations thereof. Apparatus elements can be implemented in a computer program product tangibly embodied in an information carrier, e.g., in a machine-readable storage device, for execution by a programmable processor; and methods can be performed by a programmable processor executing a program of instructions to perform functions of various embodiments by operating on input data and generating an output. Some embodiments can be implemented advantageously in one or more computer programs that are executable on a programmable system including at least one programmable processor coupled to receive data and instructions from, and to transmit data and instructions to, a data storage system, at least one input device, and/or at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example and not limitation, both general and special purpose microprocessors, which may include a single processor or one of multiple processors of any kind of computer. Generally, a processor will receive instructions and data from a read-only memory or a random-access memory or both. The essential elements of a computer are a processor for executing instructions and one or more memories for storing instructions and data. Storage devices suitable for tangibly embodying computer program instructions and data include all forms of non-volatile memory, including, by way of example, semiconductor memory devices, such as EPROM, EEPROM, and flash memory devices; magnetic disks, such as internal hard disks and removable disks; magneto-optical disks; and, CD-ROM and DVD-ROM disks. The processor and the memory can be supplemented by, or incorporated in, ASICs (application-specific integrated circuits). In some embodiments, the processor and the member can be supplemented by, or incorporated in hardware programmable devices, such as FPGAs, for example.

In some implementations, each system may be programmed with the same or similar information and/or initialized with substantially identical information stored in volatile and/or non-volatile memory. For example, one data interface may be configured to perform auto configuration, auto download, and/or auto update functions when coupled to an appropriate host device, such as the headend aircraft computing system or a ground terminal server.

In some implementations, one or more user-interface features may be custom configured to perform specific functions. An exemplary embodiment may be implemented in a computer system that includes a graphical user interface and/or an Internet browser. To provide for interaction with a user, some implementations may be implemented on a computer having a display device, such as an LCD (liquid crystal display) monitor for displaying information to the user, a keyboard, and a pointing device, such as a mouse or a trackball by which the user can provide input to the computer.

In various implementations, the system may communicate using suitable communication methods, equipment, and techniques. For example, the system may communicate with compatible devices (e.g., devices capable of transferring data to and/or from the system) using point-to-point communication in which a message is transported directly from the source to the first receiver over a dedicated physical link (e.g., fiber optic link, point-to-point wiring, daisy-chain). The components of the system may exchange information by any form or medium of analog or digital data communication, including packet-based messages on a communication network. Examples of communication networks include, e.g., a LAN (local area network), a WAN (wide area network), MAN (metropolitan area network), wireless and/or optical networks, and the computers and networks forming the Internet. Other implementations may transport messages by broadcasting to all or substantially all devices that are coupled together by a communication network, for example, by using Omni-directional radio frequency (RF) signals. Still other implementations may transport messages characterized by high directivity, such as RF signals transmitted using directional (i.e., narrow beam) antennas or infrared signals that may optionally be used with focusing optics. Still other implementations are possible using appropriate interfaces and protocols such as, by way of example and not intended to be limiting, USB 2.0, Fire wire, ATA/IDE, RS-232, RS-422, RS-485, 802.11 a/b/g, Wi-Fi, WiFi-Direct, Li-Fi, Bluetooth, Ethernet, IrDA, FDDI (fiber distributed data interface), token-ring networks, or multiplexing techniques based on frequency, time, or code division. Some implementations may optionally incorporate features such as error checking and correction (ECC) for data integrity, or security measures, such as encryption (e.g., WEP) and password protection.

As part of a pre-flight check or, conversely, in preparation for landing (e.g., taxi, takeoff, and landing (TTOL)), aircraft cabin attendants are required to confirm that tray tables are in stowed position, stowage bins are closed, and other monument doors (e.g., galley storage bays, storage closets, etc.) are closed. The manual checks and passenger reminders can be time consuming. Various embodiments may advantageously provide a flight crew with automated position indication, especially during TTOL preparation, to streamline cabin attendant preparations and ensure cabin security.

In an illustrative embodiment, position sensors may be installed within or upon aircraft cabin fixtures to identify when aircraft apparatus is in a stowed position and when the apparatus is in deployed position. In some examples, the cabin apparatus can be a tray table, stowage bin, work table, movable tablet computer or monitor, or other equipment that must be stowed for taxi, takeoff and landing (TTOL) but may be deployed in flight. The position information may be collected by a cabin attendant console or wireless application shared by cabin attendant portable devices, by an over-the seat mounted passenger service unit, and/or by control circuitry of a business class or luxury class passenger suite. Flight crew may be alerted to deployed apparatus at time of takeoff or landing.

In some embodiments, stretch sensor implementation may include a passenger seat structure. The passenger seat structure may support a seat diaphragm. The seat diaphragm may include a stretch sensor, disposed beneath, and in substantially close contact with the seat diaphragm. The seat diaphragm may support a seat cushion. In some implementations, the stretch sensor may incorporate one or more strain sensor elements, or strain gauges, to generate a detection signal.

In an illustrative example, the loaded stretch sensor implementation may receive an active load supported by the passenger seat structure. The active load may deform the seat cushion. The force on the seat cushion may deform the seat diaphragm. The force on the seat diaphragm may deform and may stretch the stretch sensor. In some examples, the stretch sensor may send an electrical signal, in response to the stretch sensor deformation, to control circuitry.

In some examples, a pneumatic pressure sensor implementation may include a passenger seat structure. The passenger seat structure may support a seat diaphragm. The seat diaphragm may be located above an air bladder. The seat diaphragm may support a seat cushion. The air bladder may define a chamber that is in fluid communication with a pressure transducer configured to measure a fluid (e.g., gas, liquid) pressure in the chamber of the air bladder.

In an illustrative embodiment, the loaded pressure sensor implementation may receive an active load supported by the passenger seat structure. The active load may deform the seat cushion. The force on the seat cushion may deform the seat diaphragm. The force on the seat diaphragm may apply pressure to and may compress the air bladder. The pressure in the air bladder may be sensed and translated by the pressure transducer. In some examples, the pressure transducer may translate the air pressure into an electrical signal, which may be sent to control circuitry. In some examples, the air bladder may send a pneumatic signal in response to the force on the seat diaphragm to a pneumatic pressure analyzer. The pneumatic pressure analyzer may then communicate with control circuitry.

In some embodiments, a distance sensor implementation may include a passenger seat structure. The passenger seat structure may support a seat diaphragm. The seat diaphragm may be located above a distance sensor. The distance sensor may be fixedly attached to a fixed location beneath the seat diaphragm. The seat diaphragm may support a seat cushion.

In an illustrative example, the loaded distance sensor implementation may receive an active load supported by the passenger seat structure. The active load may deform the seat cushion. The force on the seat cushion may deform the seat diaphragm. The force on the seat diaphragm may move the seat diaphragm closer to the distance sensor. In an illustrative example, changes in load on the seat cushion may equate to changes in distance detected by the distance sensor from the fixed reference point. In some examples, the distance sensor may send an electrical signal in response to the change in proximity of the seat diaphragm to processing circuitry.

In some examples, the distance sensor may be infrared, which may advantageously provide low-cost and high-resolution. In some examples, the distance sensor may be laser technology, which may advantageously provide fine resolution of the passenger seat loading intensity. In some examples, the distance sensor may be ultrasonic, which may advantageously provide a cost-effective solution.

In some implementations, an IR transceiver pair may provide an unbroken IR beam that laterally traverses beneath a vacant passenger seat. Upon seat occupancy, the seat diaphragm may deflect downward, thereby blocking the IR beam. In response to detecting the beam break, a signal indicating an occupied passenger seat may be generated and transmitted to, for example, control circuitry.

In some embodiments, a load cell implementation may include a passenger seat structure. The passenger seat structure may be fixedly attached to a load cell sensor. The load cell sensor may support a seat diaphragm. In some examples, the seat diaphragm may be a substantially hard substrate. The seat diaphragm may support a seat cushion.

In various implementations, the loaded load cell implementation may receive an active load. The active load may deform the seat cushion. The force on the seat cushion may be translated by the seat diaphragm to the load cell sensor. The load cell sensor may be supported by the seat structure. In some examples, the load cell sensor may send an electrical signal, in response to the load cell sensor loads, to a headend computer.

## Claims

1. A passenger activity monitoring system (1400) for an aircraft cabin, the system comprising:
a first set of sensors (115, 305) disposed in seat bottoms of a plurality of passenger seats (120);
a second set of sensors disposed in seat belts (615) of a plurality of passenger seats (120);
a crew display (105) disposed in a galley area of an aircraft;
processing circuitry (180) operably coupled to the first set of sensors, the second set of sensors and the crew display, the processing circuitry configured to execute a plurality of machine-readable instructions stored to a non-transitory computer readable medium (172), wherein the instructions, when executed by the processing circuitry, cause the processing circuitry to
receive, from the first set of sensors (115, 305), signals associated with the presence or absence of a passenger at a respective seat position,
receive, from the second set of sensors, signals associated with a buckling status of a passenger seat belt at a respective seat position,
receive, through assessing a passenger manifest, passenger assignment information as to the seating in a particular seat position for the plurality of passenger seats;
store, in a non-transitory computer readable data store, real-time information about the presence or absence of a passenger at a respective seat position and the buckling status of a passenger seat belt at a respective seat position, wherein the stored information is uniquely associated with the respective passenger seats of the plurality of passenger seats,
transmit, to the crew display, when the processing circuitry senses the presence of a passenger on the seat and senses a corresponding unbuckled status of a passenger seat belt, a notification of noncompliance based on the presence of a passenger at a respective seat position and the unbuckled status of a passenger seat belt at a respective seat position and
cause to display, at the crew display, of the notification of noncompliance and an indication of a seat position associated with the notification of noncompliance, **characterized in that**
the processing circuitry are further arranged in analysing the passenger manifest and transmit, to the crew display, when the processing circuitry senses the presence or absence of a passenger on the seat, a notification of non-compliance indicating whether the seat is occupied as set forth in the passenger manifest to identify a missing passenger or a passenger seated in an unassigned seat.

2. The system according to claim 1, further comprising a third set of sensors (1102) disposed in tray tables (1104).

3. The system according to claim 2, wherein the processing circuitry is further operable to receive, from the third set of sensors, signals associated with the stowage condition of a tray table at a respective seat position.

4. The system according to claim 3, wherein the notification of noncompliance is further based on the stowage condition of a tray table at a respective seat position.

5. The system according to one or more of claims 1-4, wherein a third set of sensors (1304, 1306) is disposed in overhead bins (135), wherein the processing circuitry is further operable to receive, from the third set of sensors, signals associated with the closure status of an overhead bin door of each storage bin of the plurality of storage bins.

6. The system according to one or more of claims 1-5, wherein the processing circuitry is further operable to transmit a remedial message to a passenger service unit at or proximate the passenger seat position associated with the notification.

7. The system according to one or more of claims 1-6, wherein the processing circuitry is further operable to transmit a notification indicating whether the plurality of passenger seats are occupied as set forth in a passenger manifest.

8. The system according to one or more of claims 1-7, wherein the notification of noncompliance is generated in response to signals indicating that a passenger present in a respective seat of the plurality of seats has an unbuckled seat belt.

9. The system according to any of claims 1-8, wherein the first set of sensors is disposed within seat diaphragms.

10. The system according to one or more of claims 1-9, wherein the first set of sensors is operable for sensing seat deflection over time.

11. The system according to one or more of claims 1-10, wherein the instructions also cause the processing circuitry to receive and store load deflection data.

## Patentansprüche

1. Passagieraktivitäts-Überwachungssystem (1400) für die Kabine eines Luftfahrzeugs, wobei das System Folgendes umfasst:
einen ersten Satz von Sensoren (115, 305), der in den Sitzunterteilen mehrerer Passagiersitze (120) angeordnet ist;
einen zweiten Satz von Sensoren, der in den Sicherheitsgurten (615) mehrerer Passagiersitze (120) angeordnet ist;
eine Besatzungsanzeige (105), die in einem Bordküchenbereich eines Luftfahrzeugs angeordnet ist;
eine Verarbeitungsschaltungsanordnung (180), die betriebstechnisch an den ersten Satz von Sensoren, den zweiten Satz von Sensoren und die Besatzungsanzeige gekoppelt ist, wobei die Verarbeitungsschaltungsanordnung konfiguriert ist, mehrere maschinenlesbare Anweisungen auszuführen, die in einem nicht transitorischen computerlesbaren Medium (172) gespeichert sind, wobei die Anweisungen, wenn sie durch die Verarbeitungsschaltungsanordnung ausgeführt werden, die Verarbeitungsschaltungsanordnung veranlassen,
von dem ersten Satz von Sensoren (115, 305) Signale zu empfangen, die der Anwesenheit oder der Abwesenheit eines Passagiers an einer jeweiligen Sitzposition zugeordnet sind,
von dem zweiten Satz von Sensoren Signale zu empfangen, die einem Anschnallstatus eines Passagiersitz-Sicherheitsgurts an einer jeweiligen Sitzposition zugeordnet sind,
durch das Bewerten einer Passagierliste Passagierzuweisungsinformationen bezüglich des Sitzens an einer speziellen Sitzposition für die mehreren Passagiersitze zu empfangen;
in einem nicht transitorischen computerlesbaren Datenspeicher Echtzeitinformationen über die Anwesenheit oder die Abwesenheit eines Passagiers an einer jeweiligen Sitzposition und den Anschnallstatus eines Passagiersitz-Sicherheitsgurts an einer jeweiligen Sitzposition zu speichern, wobei die gespeicherten Informationen den jeweiligen Passagiersitzen der mehreren Passagiersitze eindeutig zugeordnet sind,
wenn die Verarbeitungsschaltungsanordnung die Anwesenheit eines Passagiers auf dem Sitz abtastet und einen entsprechenden Nicht-angeschnallt-Status eines Passagiersitz-Sicherheitsgurts abtastet, eine Meldung der Nichteinhaltung basierend auf der Anwesenheit eines Passagiers an einer jeweiligen Sitzposition und auf dem Nicht-angeschnallt-Status eines Passagiersitz-Sicherheitsgurtes an einer jeweiligen Sitzposition an die Besatzungsanzeige zu übertragen und
zu veranlassen, auf der Besatzungsanzeige die Meldung der Nichteinhaltung und eine Angabe einer Sitzposition, die der Meldung der Nichteinhaltung zugeordnet ist, anzuzeigen,
**dadurch gekennzeichnet, dass**
die Verarbeitungsschaltungsanordnung ferner dafür ausgelegt ist, die Passagierliste zu analysieren und, wenn die Verarbeitungsschaltungsanordnung die Anwesenheit oder die Abwesenheit eines Passagiers auf dem Sitz abtastet, eine Meldung der Nichteinhaltung an die Besatzungsanzeige zu übertragen, die angibt, ob der Sitz belegt ist, wie in der Passagierliste dargelegt ist, um einen fehlenden Passagier oder einen Passagier, der in einem nicht zugewiesenen Sitz sitzt, zu identifizieren.

2. System nach Anspruch 1, das ferner einen dritten Satz von Sensoren (1102) umfasst, der in den Klapptischen angeordnet ist.

3. System nach Anspruch 2, wobei die Verarbeitungsschaltungsanordnung ferner betreibbar ist, von dem dritten Satz von Sensoren Signale zu empfangen, die dem Verstauungszustand eines Klapptischs an einer jeweiligen Sitzposition zugeordnet sind.

4. System nach Anspruch 3, wobei die Meldung der Nichteinhaltung ferner auf dem Verstauungszustand eines Klapptischs an einer jeweiligen Sitzposition basiert.

5. System nach einem oder mehreren der Ansprüche 1-4, wobei ein dritter Satz von Sensoren (1304, 1306) in den Gepäckfächern (135) angeordnet ist, wobei die Verarbeitungsschaltungsanordnung ferner betreibbar ist, von dem dritten Satz von Sensoren Signale zu empfangen, die dem Verschlusszustand einer Gepäckfachtür jedes Gepäckfachs der mehreren Gepäckfächer zugeordnet sind.

6. System nach einem oder mehreren der Ansprüche 1-5, wobei die Verarbeitungsschaltungsanordnung ferner betreibbar ist, eine Abhilfenachricht an eine Passagierserviceeinheit bei der oder unmittelbar bei der Passagiersitzposition, die der Meldung zugeordnet ist, zu übertragen.

7. System nach einem oder mehreren der Ansprüche 1-6, wobei die Verarbeitungsschaltungsanordnung ferner betreibbar ist, eine Meldung zu übertragen, die angibt, ob die mehreren Passagiersitze belegt sind, wie in einer Passagierliste dargelegt ist.

8. System nach einem oder mehreren der Ansprüche 1-7, wobei die Meldung der Nichteinhaltung in Reaktion auf Signale erzeugt wird, die angeben, dass ein Passagier, der in einem jeweiligen Sitz der mehreren Sitze anwesend ist, einen nicht angeschnallten Sicherheitsgurt aufweist.

9. System nach einem der Ansprüche 1-8, wobei der erste Satz von Sensoren innerhalb der Sitzmembranen angeordnet ist.

10. System nach einem oder mehreren der Ansprüche 1-9, wobei der erste Satz von Sensoren betreibbar ist, eine Sitzdurchbiegung im Lauf der Zeit abzutasten.

11. System nach einem oder mehreren der Ansprüche 1-10, wobei die Anweisungen die Verarbeitungsschaltungsanordnung außerdem veranlassen, Lastdurchbiegungsdaten zu empfangen und zu speichern.

## Revendications

1. Système de surveillance d'activité de passager (1400) pour une cabine d'aéronef, le système comprenant :
un premier ensemble de capteurs (115, 305) disposé dans des parties inférieures de sièges d'une pluralité de sièges passagers (120) ;
un deuxième ensemble de capteurs disposé dans des ceintures de sécurité (615) d'une pluralité de sièges passagers (120) ;
un affichage d'équipage (105) disposé dans une zone d'office d'un aéronef ;
un ensemble de circuits de traitement (180) couplé de manière fonctionnelle au premier ensemble de capteurs, au deuxième ensemble de capteurs et à l'affichage d'équipage, l'ensemble de circuits de traitement étant configuré pour exécuter une pluralité d'instructions lisibles par machine stockées sur un support non transitoire lisible par ordinateur (172), où les instructions, lorsqu'elles sont exécutées par l'ensemble de circuits de traitement, amènent l'ensemble de circuits de traitement
à recevoir, à partir du premier ensemble de capteurs (115, 305), des signaux associés à la présence ou à l'absence d'un passager à une position de siège respective,
à recevoir, à partir du deuxième ensemble de capteurs, des signaux associés à un état de bouclage d'une ceinture de sécurité de passager à une position de siège respective,
à recevoir, en évaluant un manifeste de passagers, des informations d'attribution de passager concernant le fait de s'assoir dans une position de siège particulière pour la pluralité de sièges passagers ;
à stocker, dans une mémoire de données non transitoire lisible par ordinateur, des informations en temps réel sur la présence ou l'absence d'un passager à une position de siège respective et l'état de bouclage d'une ceinture de sécurité de passager à une position de siège respective, où les informations stockées sont uniquement associées aux sièges passagers respectifs de la pluralité de sièges passagers,
à transmettre, à l'affichage d'équipage, lorsque l'ensemble de circuits de traitement détecte la présence d'un passager sur le siège et détecte un état débouclé correspondant d'une ceinture de sécurité de passager, une notification de non-conformité sur la base de la présence d'un passager à une position de siège respective et de l'état débouclé d'une ceinture de sécurité de passager à une position de siège respective et
à provoquer l'affichage, à l'affichage d'équipage, de la notification de non-conformité et d'une indication d'une position de siège associée à la notification de non-conformité, **caractérisé en ce que**
l'ensemble de circuits de traitement est en outre agencé pour analyser le manifeste de passagers et transmettre, à l'affichage d'équipage, lorsque l'ensemble de circuits de traitement détecte la présence ou l'absence d'un passager sur le siège, une notification de non-conformité indiquant si le siège est occupé comme indiqué dans le manifeste de passagers pour identifier un passager manquant ou un passager assis dans un siège non attribué.

2. Système selon la revendication 1, comprenant en outre un troisième ensemble de capteurs (1102) disposé dans des tables à plateau (1104).

3. Système selon la revendication 2, dans lequel l'ensemble de circuits de traitement peut en outre fonctionner pour recevoir, à partir du troisième ensemble de capteurs, des signaux associés à la condition de rangement d'une table à plateau à une position de siège respective.

4. Système selon la revendication 3, dans lequel la notification de non-conformité est en outre basée sur la condition de rangement d'une table à plateau à une position de siège respective.

5. Système selon une ou plusieurs des revendications 1 à 4, dans lequel un troisième ensemble de capteurs (1304, 1306) est disposé dans des bacs supérieurs (135), où l'ensemble de circuits de traitement peut en outre fonctionner pour recevoir, à partir du troisième ensemble de capteurs, des signaux associés à l'état de fermeture d'une porte de bac supérieur de chaque bac de stockage de la pluralité de bacs de stockage.

6. Système selon une ou plusieurs des revendications 1 à 5, dans lequel l'ensemble de circuits de traitement peut en outre fonctionner pour transmettre un message de correction à un bloc service passagers à la position de siège passager associée à la notification ou à proximité de celle-ci.

7. Système selon une ou plusieurs des revendications 1 à 6, dans lequel l'ensemble de circuits de traitement peut en outre fonctionner pour transmettre une notification indiquant si la pluralité de sièges passagers est occupée comme indiqué dans un manifeste de passagers.

8. Système selon une ou plusieurs des revendications 1 à 7, dans lequel la notification de non-conformité est générée en réponse à des signaux indiquant qu'un passager présent dans un siège respectif de la pluralité de sièges a une ceinture de sécurité débouclée.

9. Système selon l'une des revendications 1 à 8, dans lequel le premier ensemble de capteurs est disposé à l'intérieur de diaphragmes de sièges.

10. Système selon une ou plusieurs des revendications 1 à 9, dans lequel le premier ensemble de capteurs peut fonctionner pour détecter une déflexion de siège au cours du temps.

11. Système selon une ou plusieurs des revendications 1 à 10, dans lequel les instructions amènent également l'ensemble de circuits de traitement à recevoir et à stocker des données de déflexion sous charge.
